# EUROPEAN PATENT APPLICATION

(11) **EP 4 390 520 A1**
(43) Date of publication of application: **26.06.2024**
(21) Application number: 22306980.8
(22) Date of filing: 21.12.2022
(51) Int. Cl.: G02C 7/06, G02C 7/02

(54) **SPECTACLE LENS**

(71) Applicant: Essilor International, 94220 Charenton-Le-Pont (FR)
(72) Inventor: GUILLOT, Matthieu, 92130 ISSY LES MOULINEAUX (FR); FERMIGIER, Bruno, 94700 MAISONS ALFORT (FR)
(74) Representative: Jacobacci Coralis Harle

(57) **Abstract**

Spectacle lens comprising at least
- a first zone comprising a plurality of micro-optical elements arranged to cover at least 30 percent of the total area of the first zone, and
- a second zone comprising a plurality of micro-optical elements arranged to cover at least 30 percent of the total area of the second zone,
wherein, the first zone is different from the second zone, and wherein the micro-optical elements of the first and second zones are arranged such that
for a predetermined range of spatial frequencies, values of a modulation transfer function of the first zone and values of a modulation transfer function of the second zone differ by less than 40%.

## Description

### TECHNICAL FIELD OF THE INVENTION

The invention relates to a spectacle lens for improving visual ability of a wearer, said spectacle lens comprising micro-optical elements.

### BACKGROUND INFORMATION AND PRIOR ART

Myopia of an eye is characterized by the fact that the eye focuses light in front of the retina. In other words, a myopic eye presents a length that is not suitable for clear vision. Myopia has both genetic and environmental origins. In the latter case, it develops due for instance to the increase in near vision tasks and in usage of digital devices such as digital screens of computers and smartphones, but also to less outdoor activities.

Many solutions exist that aim at reducing myopia evolution. For example, it is known to use a lens arranged to be worn in front of one eye of a subject and having micro-optical elements comprising optical features adapted to provide evolution control function of the myopia in order to manage the myopia progression and/or to alleviate the discomfort induced by myopia and/or myopia control. These solutions are functional but could alter the visual acuity of the subject.

### SUMMARY OF THE INVENTION

In this context, one object of the invention is to provide a spectacle lens improving visual ability of the wearer with a good tradeoff between vision correction, visual acuity and myopia discomfort and evolution control.

The above objects are achieved according to the invention by providing a spectacle lens comprising at least
- a first zone comprising a plurality of micro-optical elements arranged to cover at least 30 percent of the total area of the first zone, and
- a second zone comprising a plurality of micro-optical elements arranged to cover at least 30 percent of the total area of the second zone,

the first zone is different from the second zone, and the micro-optical elements of the first and second zones are arranged such that
for a predetermined range of spatial frequencies, values of a modulation transfer function of the first zone and values of a modulation transfer function of the second zone differ by less than 40%.

Thanks to the feature of the spectacle lens, the spectacle lens presents a good tradeoff between visual acuity and myopia discomfort and evolution control.

Typically, defining at least two zones having a same shape but different orientations or positions in the spectacle lens allows considering a change of a gaze direction. Thus, if values (or modulation rates) of the respective modulation transfer functions of these two zones are nearly identical, it means that the spectacle lens provide a visual quality nearly stable for different gaze directions defined by the location of the at least two zones.

In addition, defining at least two zones having different sizes allows considering the variation of a usual pupil size of a wearer. Thus, if values (or modulation rates) of the respective modulation transfer functions of these two zones are nearly identical, it means that the spectacle lens provide a visual quality nearly stable for different luminous environment that the wearer could meet in real life (for example indoor or outdoor activities, etc.).

According to an embodiment, the predetermined range of spatial frequencies being a first predetermined range of the spatial frequencies,
the micro-optical elements of the first zone and the micro-optical elements of the second zone are arranged such that:
for a second predetermined range of spatial frequencies, the values of the modulation transfer function of the first zone and the values of the modulation transfer function of the second zone differ by more than 10%.

In an example of this embodiment, the second predetermined range of the spatial frequencies differs from the first predetermined range of the spatial frequencies by at least 5 cycles per degree.
In another example of this embodiment,
- the first range of the spatial frequencies is comprised between 1 and 5 cycles per degree and the second range of the spatial frequencies is comprised between 15 and 20 cycles per degree or,
- the second range of the spatial frequencies is comprised between 1 and 5 cycles per degree and the first range of the spatial frequencies is comprised between 15 and 20 cycles per degree.

According to an embodiment, a projection of the first zone on a plane perpendicular to an optical axis of the spectacle lens presents a circular outline and has a diameter comprised between 2 and 20 millimeters.

According to another embodiment, a projection of the second zone on a plane perpendicular to an optical axis of the spectacle lens presents a circular outline and has a diameter comprised between 2 and 20 millimeters.

According to an embodiment, a projection of the first zone on a plane perpendicular to an optical axis of the spectacle lens and a projection of the second zone on the plane have different shapes or different sizes.

According to an embodiment, a projection of the first zone on a plane perpendicular to an optical axis of the spectacle lens and a projection the second zone on the plane are concentric.

According to an embodiment, a geometrical center of a projection of the first zone on a plane perpendicular to an optical axis of the spectacle lens is spaced by at least 0.5 millimeter from a geometrical center of a projection of the second zone on the plane.

According to an embodiment, the spectacle lens comprises a third zone comprising a plurality of micro-optical elements arranged to cover at least 30 percent of the total area of the third zone, the third zone having an outer outline presenting a geometrical center, the center of the third zone is spaced by less than 0.5 millimeter from the center of the first zone, and the micro-optical elements of the first and third zones are arranged such that the first and third zones have respective modulation transfer functions providing, for each frequency within the first predetermined range of spatial frequencies, respective modulation rates which are nearly identical with a tolerance of less than 20 percent.

In other words, it means that the modulation rate of the modulation rate of the third zone differs by less than 20 percent from the modulation rate of the first zone.

According to an embodiment, the respective modulation rates of the first and third zones are nearly identical with a tolerance of less than 10 percent.

In other words, it means that the modulation rate of the modulation rate of the third zone differs by less than 10 percent from the modulation rate of the first zone.

According to an embodiment, the first zone and the third zone are concentric.

According to an embodiment, the range of spatial frequencies within which the modulation rates of the respective modulation transfer functions are considered comprised between 1 and 5 cycles per degree or between 15 and 20 cycles per degree.
According to an embodiment, a density of the micro-optical elements of the first zone differs by less than 5% from a density of the micro-optical elements of the second zone, and/or
- an average mean optical power of at least one of the micro-optical elements of the first zone is different from an average mean optical power of at least one of the micro-optical elements of the second zone, and/or
- an optical function of at least one of the micro-optical elements of the first zone is different from an optical function of the at least one of micro-optical elements of the second zone and/or
- a diameter of at least one of the micro-optical elements of the first zone differs by less than 5% from a diameter of at least one of the micro-optical elements of the second zone.

In the present disclosure, the density of the micro-optical elements over a predetermined zone of the lens element can be defined as the ratio between the total surface of the micro-optical element and the area of the predetermined zone.

According to an embodiment, for spatial frequencies between 1 and 5 cycles per degree, the values of the modulation transfer function of the first zone are higher than 0.3 for example higher than 0.4 or higher than 0.5 and
for spatial frequencies between 15 and 20 cycles per degree, the values of the modulation transfer function of the first zone are higher than 0.05 for example higher than 0.1 for example higher than 0.5 and/or
for the spatial frequencies between 1 and 5 cycles per degree, the values of the modulation transfer function of the second zone are higher than 0.3 for example higher than 0.4 or higher than 0.5 and
for the spatial frequencies between 15 and 20 cycles per degree, the values of the modulation transfer function of the second zone are higher than 0.05 for example higher than 0.1 for example higher than 0.5.

According to an embodiment, at least one of the micro-optical elements of the first zone has an average mean optical power value comprised between 1 diopter and 10 diopters and/or at least one of the micro-optical elements of the second zone has an average mean optical power value comprised between 1 diopter and 10 diopters.

According to an embodiment, the micro-optical elements of the first zone are arranged according to a first pattern comprising at least two first concentric rings of micro-optical elements, a first of the at least the two first concentric rings being spaced from a second of the at least two first concentric rings by at least 1 millimeter and/or
the micro-optical elements of the second zone are arranged according to a second pattern comprising at least two second concentric rings of micro-optical elements, a first of the at least two second concentric rings being spaced from a second of the at least two second concentric rings by at least 1 millimeter.

According to an embodiment, at least one of the micro-optical elements of the first zone is spaced from at least another of the micro-optical elements of the first zone or at least of the micro-optical elements of the second zone by at least 0,3 millimeter.

According to an embodiment, at least one of the micro-optical elements of the first zone or at least one of the micro-optical elements of the second zone provide refractive optical function, diffractive optical function or diffusive optical function.

According to an embodiment, the spectacle lens comprises a third zone comprising a plurality of micro-optical elements arranged to cover at least 30 percent of the third zone,
the third zone is different from the first zone, the third zone is different from the second zone, and the micro-optical elements of the first zone and the micro-optical elements of the third zone are arranged such that:
for the predetermined range of spatial frequencies, the values of the modulation transfer function of the first zone and values of a modulation transfer function of the third zone differ by less than 20%.

According to an embodiment, each micro-optical element is spaced from the other micro-optical elements by at least 0,4 millimeter.

According to an embodiment, each micro-optical element is spaced from the other micro-optical elements by at least 0,5 millimeter.

A further object of the invention is to provide a vision compensation spectacles comprising a frame and two spectacle lens according to the present disclosure.

In the present disclosure, the wording "first zone", "second zone", "third zone", "fourth zone", "fifth zone" and "sixth zone" is not limitative and allows distinguishing different zones of the spectacle lens according to the present disclosure.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a schematic perspective view of spectacles comprising a pair of lenses according to the present disclosure;
- Figure 2 shows a schematic axial cut view of a spectacle lens according to the present disclosure;
- Figure 3 shows a schematic perspective half-view of a spectacle lens according to the present disclosure;
- Figure 4 shows a front view of a first example of a spectacle lens according to the present disclosure, when projected into a facial plane perpendicular to the main axis of the spectacle lens;
- Figure 5 shows an expended view of a part of the spectacle lens shown on figure 4;
- Figure 6 shows a graphical representation of the modulation transfer functions computed in the first and second zones of the spectacle lens according to the first example;
- Figure 7 shows a front view of a second example of a spectacle lens according to the present disclosure, when projected into a facial plane perpendicular to the main axis of the spectacle lens;
- Figure 8 shows an expended view of a part of the spectacle lens according to the second example;
- Figure 9 shows a graphical representation of the modulation transfer functions computed in a third zone and in a fourth zone of the spectacle lens according to the second example;
- Figure 10 shows a graphical representation of the modulation transfer functions computed in a fifth zone and in a sixth zone of the spectacle lens according to the second example;
- Figure 11 shows a schematic view of a system used to measure the modulation transfer function;
- Figure 12 shows a front view of a third example of a spectacle lens according to the present disclosure, when projected into a facial plane perpendicular to the main axis of the spectacle lens;
- Figure 13 shows an expended view of a part of the spectacle lens according to the third example;
- Figure 14 shows a graphical representation of the modulation transfer functions computed in a first zone, in a second zone and in a third zone of the spectacle lens according to the third example;
- Figure 15 shows an expended view of a part of a spectacle lens according to a fourth example;
- Figure 16 shows a graphical representation of the modulation transfer functions computed in a first zone, in a second zone and in a third zone of the spectacle lens according to the fourth example;
- Figure 17 shows an expended view of a part of a spectacle lens according to a fifth example;
- Figure 18 a graphical representation of the modulation transfer functions computed in a first zone, in a second zone and in a third zone of the spectacle lens according to the fifth example
- Figure 19 shows an expended view of a part of a spectacle lens according to a sixth example;
- Figure 20 shows a graphical representation of the modulation transfer functions computed in first zone and in second zone of the spectacle lens according to the sixth example;
- Figure 21 shows a graphical representation of the modulation transfer functions computed in third zone and in fourth zone of the spectacle lens according to the sixth example;
- Figure 22 shows a graphical representation of the modulation transfer functions computed in fifth zone and in sixth zone of the spectacle lens according to the sixth example.

### Device

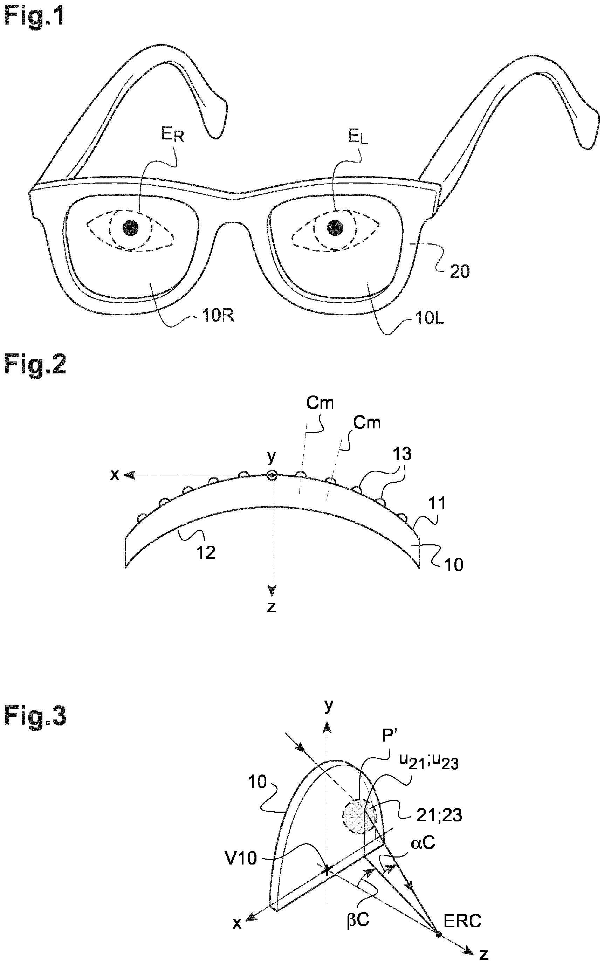

Figures 1 to 3 show a spectacle lens 10 according to the present disclosure.

The spectacle lens 10 is here a concave lens comprising a convex front face 11 and a concave rear face 12, but could alternatively be a concavo-convex lens or a plano-convex lens.

As shown on figure 1, two similar spectacle lenses 10, namely a right spectacle lens 10R and a left spectacle lens 10L are intended to be mounted on a frame 20 of spectacles in order to be positioned in front of the right eye E_{R} and the left eye E_{L} of the wearer.

The spectacle lens 10 illustrated by figure 2 has two opposite optical faces, the front face 11 directed towards an object side and the rear face 12 that is closest to the eye E_{R}, E_{L} of the wearer. The spectacle lens 10 presents a center V10, which is typically the optical or geometrical center of the spectacle lens 10.

The spectacle lens 10 has an optical design comprising a macro-optical component and a micro-optical component.

The macro-optical component of the optical design (also referred to as "macro-optical design") provides a macro-optical function providing at least one global refractive power over most or all the useful surface of the spectacle lens 10, to provide the wearer's eye a dioptric correction adapted to the dioptric correction need of the wearer in wearing conditions. For example, this macro-optical function is provided by the geometry of the front face 11 or of the rear face 12 or of both faces, typically by adapting the curvature radii of one or both faces of the spectacle lens. The refractive power of the spectacle lens 10 is generally comprised between ±15 diopters.

The refractive power provided by the macro-optical design comprises at least a spherical power and may also comprise a cylindrical power, a prismatic deviation power, according to the wearer's correction need determined by an eye care professional in order to correct the vision defects of the wearer. Typically, the global refractive power corresponds to the dioptric correction based on a prescription of the wearer, for example in standard wearing conditions. For example, the prescription for an ametropic wearer comprises the values of optical power and of astigmatism comprising a cylinder and an axis for distance vision and/or for near vision.

The spectacle lens defined according to the present disclosure is adapted to correct the vision of an individual (i.e. a wearer) in wearing conditions. The wearing conditions are to be understood as the position of the spectacle lens 10 in a spectacle frame 20 worn by the wearer in front of its eyes. The wearing conditions are defined according to physiological parameters of the wearer or to geometrical parameters of the frame 20 when the frame 20 is worn by the wearer. The wearing conditions comprise a pantoscopic angle, a cornea to lens distance, a pupil to cornea distance, an eye rotation center (ERC) to pupil distance and a wrap angle. Figure 1 shows a pair of spectacle lenses, numbered 10R and 10L. The spectacle lens 10R is worn in front of the right eye E_{R} of the wearer and the spectacle lens 10L is worn in front of the left eye E_{L} of the wearer.

An example of standard wearing conditions may be defined by a pantoscopic angle of -8° for an adult or between 0° and 5° for a child, a cornea to lens distance of 12 mm, a pupil to cornea distance of 2 mm, an ERC to pupil distance of 11.5 mm and a wrap angle of 0°.

The pantoscopic angle is the angle in a vertical plane between the normal to the rear surface 12 of the spectacle lens 10 and the visual axis of the eye (axis A) in a primary position, defined as a horizontal direction, when the wearer gazes straight ahead at infinity.

The cornea to lens distance is the distance along the visual axis of the eye E in a primary position between the cornea and the rear surface 12 of the spectacle lens 10.

The wrap angle of the spectacle frame 20 is the angle in the horizontal plane between the normal to the rear face 12 of the lens at its center and the sagittal plane.

The micro-optical component of the optical design (also referred to as "micro-optical design") of the spectacle lens 10 is made of several micro-optical elements 13 arranged on at least one of the front and rear faces of the lens, preferably the convex front face.

Each micro-optical element has its own optical function and has small dimensions of less than 2 mm, preferably less than 1 mm. Each micro-optical element consists for example in a microlens, a Pi-Fresnel lens, a prism, a diffuser, a beam-splitter or a diffraction grating. The micro-optical elements are typically formed by photolithography, holography, molding, machining or encapsulation.

This arrangement of all the micro-optical elements provides a micro-optical function which is distinct from and complements the macro-optical function. Thus, the global optical function of the spectacle lens 10 is the addition of its macro-optical function and of its micro-optical function respectively provided by the macro-optical and micro-optical components of its optical design. The micro-optical function of the spectacle lens 10 is the optical function provided by the spectacle lens 10 without its macro-optical design, that is without any global refractive power over most or all the useful radial width of the spectacle lens 10. The macro-optical function of the spectacle lens 10 is the optical function provided by the spectacle lens 10 without its micro-optical design, that is without any micro-optical element.

Each micro-optical element provides a refractive, diffractive or diffusive function.

In an embodiment, a part or all of the micro-optical elements are refractive micro-optical elements. Each refractive micro-optical element can comprise a monofocal or a bifocal spherical dioptric power.

In another embodiment, a part or all of the micro-optical elements are diffractive. Each diffractive micro-optical element comprises for example a diffractive Pi-Fresnel micro-lens. A diffractive Pi-Fresnel micro-lens has a phase function, which presents π phase jumps at the nominal wavelength λ0. The wavelength λ0 is preferably 550 nm for human eye vision applications. The diffractive Pi-Fresnel micro-lens presents an optical axis passing through the optical center of the micro-lens. The micro-lens with diffractive Pi-Fresnel micro-optical elements mainly diffracts in two diffraction orders associated with two dioptric powers P0(λ0) and P1 (λ0). Thus, when receiving collimated light, the micro-lens concentrate light on two distinct areas on their axis.

For example, the dioptric power P0(λ0) is comprised in a range of +/-0.12 diopter in addition to a sphero-torical power of the predetermined refractive power of the spectacle lens, deriving for example from a prescription for the wearer.

According to an embodiment, the dioptric power P1(λ0) is comprised in absolute value between 1 diopter and 10 diopters. Preferably, the dioptric power P1(λ0) is comprised between ±2 diopters and ±6 diopters.

As an alternative, all or a part of the micro-optical element are diffusive micro-optical elements. Each diffusive micro-optical element comprises a diffusive micro-optical element scattering light. For example, a collimated light is scattered in a cone with an apex angle ranging from +/-1 ° to +/- 40°. In an example, the diffusive micro-optical elements are adapted to scatter light locally, i.e. at the intersection between the given micro-optical element and the wavefront arriving on the given micro-optical element. The micro-optical elements having a diffusive optical function may be similar to the micro-optical elements described in the document US10302962.

Each micro-optical element 13 has a micro-optical axis Cm. Typically, the micro-optical axis Cm of a given micro-optical element corresponds to the axis of revolution or to the optical axis of the micro-optical element.

In the example illustrated, all the micro-optical elements 13 are located on the front face 11 of the spectacle lens 10.

Alternatively, all or a part of the micro-optical elements can be located on the rear face 12 or on both front face 11 and rear face 12 of the spectacle lens 10.

Alternatively, all or a part of the micro-optical elements can be embedded in the thickness of the spectacle lens between its front and rear faces.

In practice, the micro-optical elements are formed as a single integral part with the rest of the spectacle lens (typically by injection molding, press-molding, rolling or machining) or, as an alternative, on a film (forming of a patch or laminated) applied over one or both of the front face 11 and the rear face 12 of the spectacle lens 10.

The spectacle lens 10 is arranged for controlling the myopia growth.

In a non-limitative example, the arrangement of the micro-optical elements 13 of the spectacle lens 10 has optical features to provide an evolution control function of the myopia for the eye of the wearer. In other words, the micro-optical elements 13 of the spectacle lens 10 have each optical features adapted to control the myopia growth.

According to an embodiment, the arrangement of the micro-optical elements of the spectacle lens is adapted to provide a specific spatial distribution of blur also called defocus effect. To this end, the micro-optical elements comprise micro-lenses providing a refractive power that differs from the refractive power of the macro-optical component the optical design of the spectacle lens 10.

As shown on figure 3, the spectacle lens 10 comprises an ophthalmic lens center V10, which is typically the optical or geometrical center of the spectacle lens 10. The spectacle lens 10 is also defined with a first orthogonal frame of reference (V10, x, y, z), for which the transverse axis z passe through the eye rotation center ERC of the eye E of the wearer.

As illustrated by figure 3, a central vision gaze direction is defined by two angles (αC, βC) representing the eye rotation from a primary gaze direction. More precisely, the angles βC and αC represent respectively the horizontal and vertical rotation angles applied at the eye rotation center ERC in a Fick system to move the eye from the primary gaze reference axis to the eye gaze axis. A third torsional rotation of the eye derived from these two angles is applied so that the eye gaze axes respect Listing law. Figure 3 illustrates an example for the angles αC and βC with respect to the eye rotation center ERC and the spectacle lens 10. The central vision gaze direction can be represented by a line passing through the eye rotation center ERC.

The angle αC is defined in the vertical plane passing through the eye rotation center ERC, while the angle βC is defined in the horizontal plane passing through the eye rotation center ERC. The angle αC is defined as positive when the wearer's eye looks down and negative when the wearer's eye looks up. The angle βC is defined as positive when the wearer's eye looks to the nasal side and negative when the wearer's eye looks to the temporal side.

In the present disclosure different zones of the spectacle lens will be presented. Generally, the different parameters related of these different zones are determined or defined based on a projection of the zones on a plane perpendicular to an optical axis of the spectacle lens

### First example

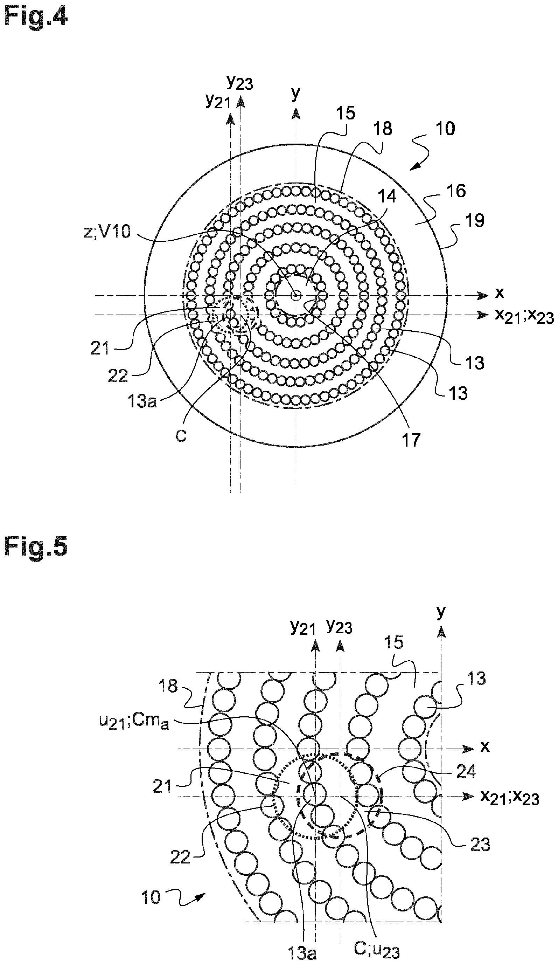

It will be disclosed in relation with figures 4 to 6 a first example of the spectacle lens 10 according to the present disclosure.

The spectacle lens 10 shown on figure 4 comprises a central zone 14 which is free of any micro-optical element, and which has a circular outline 17, for example of 4.5 millimeters in radius, centered on the ophthalmic center V10 of the spectacle lens 10. In a variant, the outline of the central zone 14 can present another shape, such as a polygonal (in particular hexagonal) or oval shape.

The spectacle lens 10 further comprises a first peripheral zone 15 arranged around the central zone 14 and a second peripheral zone 16 arranged around the first peripheral zone 15.

In the example of the figure 4, the arrangement of the micro-optical elements 13 of the spectacle lens 10 is disposed on the first peripheral zone 15. The second peripheral zone 16 is free of any micro-optical element.

By first or second "peripheral zone" it is meant a specific area of the spectacle lens.

The second peripheral zone 16 of the spectacle lens 10 is arranged to be fixed to the spectacle frame 20.

The central zone 14, the first peripheral zone 15 and the second peripheral zone 16 are concentric. They are centered on the optical center of the spectacle lens 10. The first peripheral zone 15 surrounds the central zone 14 and is bounded internally by the circular outline 17 of the central zone 14 and externally by a circular outline 18. The second peripheral zone 16 surrounds the first peripheral zone 15 and is bounded internally by the circular outline 18 of the first peripheral zone 15 and externally by a circular outline 19 which can coincide with an outer edge of the spectacle lens 10 as shown on figure 4.

In a non-limitative example, the circular outline 17 (which is the outer outline of the central zone 14 and the inner outline of the first peripheral zone 15) presents a radius between 2,00 millimeters and 5 millimeters, preferably between 3 and 4.5 millimeters.

Preferably, the outline 18 (which is the outer outline of the first peripheral zone 15 and the inner outline of the second peripheral zone 16) presents a diameter between 40.0 millimeters and 80.0 millimeters, preferably between 50.00 millimeters and 70.0 millimeters. It is for example of example 60.0 millimeters in this embodiment. The outer circular outline 19 (which is the outer edge of the spectacle lens) of the second peripheral zone 16 presents a diameter between 80 millimeters and 100.00 millimeters, preferably of 70.00 millimeters as shown in the illustrated example.

Of course, although that the outline 17 of the central zone 14, the outline 18 of the first peripheral zone 15 and the outline 19 of the second peripheral zone 16 are circular in this example, they can present another shape, such as a polygonal (in particular hexagonal) or oval shape. Typically, the form of the outline the outline 17 of the central zone 14, the outline 18 of the first peripheral zone 15 and the outline 19 of the second peripheral zone 16 depend on the form of the spectacle lens 10.

In the example shown on figures 4 and 5, the micro-optical elements 13 are arranged according to concentric rings of adjacent micro-optical elements 13 centered on a center of the central zone 14 that coincide with the center V10 of the spectacle lens 10. Each ring is spaced between 1.0 millimeter and 1.5 millimeters from each neighboring ring. On figure 4, the spectacle lens 10 comprises five concentric rings of micro-optical elements.

In this embodiment, the micro-optical elements of the spectacle lens 10 are microlenses and are all identical. Here, each micro-optical element 13 presents a mean power of about +4.5 diopters and are aspherical micro-optical elements. Each micro-optical element has a diameter of about 1.12 millimeters and a curvature radius of 131.3 millimeters. The mean power of the micro-optical elements is in addition to the prescription correction of the spectacle lens 10.

By spherical mean power, it is meant that the spherical dioptric power of the micro-optical element can vary on the surface of the spectacle lens 10. For example, in this embodiment, the micro-optical elements belonging to a same ring of micro-optical elements have a same mean dioptric power, whereas the micro-optical elements belong to different rings of micro-optical elements can have a different mean dioptric power.

On figures 4 and 5, the first peripheral zone 15 comprises a first zone 21 having a circular shape of 4 millimeters in diameter.

The first zone 21 comprises a portion or a part of the micro-optical elements of the first peripheral zone 15. Typically, the micro-optical elements comprised in the first zone 21 are arranged to cover at least 30 percent of the total area of the first zone 21. Here, the density of the micro-optical elements in the first zone 21 is higher than 31 percent.

The first zone has an outer outline 22 presenting a geometrical center U21. Typically, the geometric center U21 of the first zone 21 is spaced by at least 4 millimeters from the ophthalmic center V10 of the spectacle lens 10. Here, the geometric center U₂₁ of the first zone 21 is spaced by 9.8 millimeters from the ophthalmic center V10 of the spectacle lens 10. In the following, the first zone 21 is defined with an orthogonal frame of reference (U₂₁, x₂₁, y₂₁).

In the present disclosure, the distance between the ophthalmic center V10 of the spectacle lens 10 and the geometric center of any zone defined in the first peripheral zone 15 is referred to as eccentricity.

On figures 4 and 5, the geometrical center U₂₁ is centered on the micro-optical axis Cm of one of the micro-optical elements comprised in the first zone 21. Here, the geometric center U₂₁ is centered on the micro-optical axis Cma a micro-optical element 13a arranged on the third ring of the spectacle lens 10 starting from the center V10 of the spectacle lens 10. Of course, in a variant, the first zone 21 can be centered on any micro-optical element of the first peripheral zone 15 of the spectacle lens 10.

The first peripheral zone 15 further comprises a second zone 23 having a circular shape of 4 millimeters in diameter.

The second zone 23 comprises a portion or a part of the micro-optical elements of the first peripheral zone 15. Typically, the micro-optical elements comprised in the second zone 23 are arranged to cover at least 30 percent of the total area of the first zone. Here, the density of the micro-optical elements in the second zone 23 is higher than 40 percent. The position of the micro-optical elements comprised in the second zone 23 differs from the position of the micro-optical elements comprised in the first zone 21.

The second zone 23 has an outer outline 24 presenting a geometrical center U₂₃. Typically, the geometric center U₂₃ of the second zone 23 is spaced by at least 4 millimeters from the ophthalmic center V10 of the spectacle lens 10. Here, the geometric center U₂₃ of the second zone 23 is spaced by 8.65 millimeters from the ophthalmic center V10 of the spectacle lens 10. In the following, the second zone 23 is defined with an orthogonal frame of reference (U₂₃, x₂₃, y₂₃).

The geometric center U₂₃ of the second zone 23 is centered on a point C positioned on a portion of the first peripheral zone 15 that is free of micro-optical element. Typically, the geometric center U₂₃ is centered on the point C positioned at the middle of two adjacent rings of micro-optical elements, here at the middle of the second and the third rings of micro-optical elements starting from the center V10 of the spectacle lens 10. Thus, the geometrical center U₂₃ of second zone 23 is spaced from the geometric center U₂₁ of the first zone 21 by at least 0.5 millimeter, here by at least 1.0 millimeter. Typically, in this example, the axis y₂₁ of the first zone 21 is spaced from the axis y₂₃ of the second zone 23 by at least 1.0 millimeter.

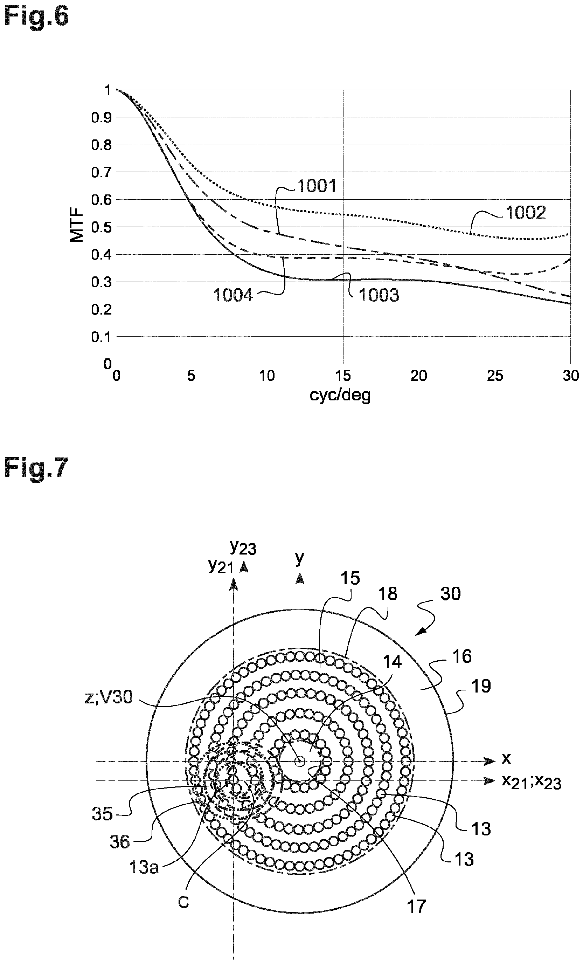

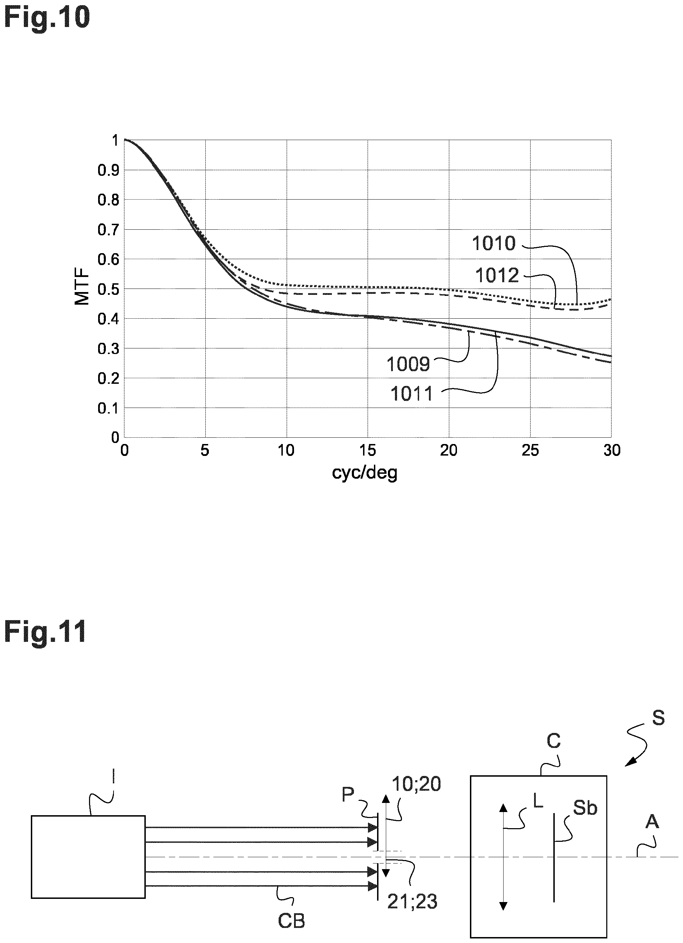

It will be disclosed, with reference to figures 6 and 11, technical features of the first 21 and second 23 zones. The technical features of the first zone 21 and second zone 23 are defined by their modulation transfer function.

In the present disclosure, the modulation transfer function gives the percentage of transferred contrast throughout the considered area of the spectacle lens 10 as a function of the spatial frequency (expressed as cycles per degree). The computation the modulation transfer function will be explained above on figures 3 and 11.

The modulation transfer functions of this example are computed on the first 21 and second 23 zones. In the following disclosure, the modulation transfer function can be directly measured using an optical system S as described on figure 11.

The system S comprises a light capturing device C, a light emitting device I configured to generate a collimated beam CB of light, and an aperture P positioned on the spectacle lens 10 or very close to spectacle lens 10 and used as a diaphragm to delimit the first zone 21 or the second zone 23 on which the modulation transfer function is measured. Only the rays of the collimated beam passing through the aperture P reach the light capturing device. Here, the aperture P is positioned on or in front of the front face F1 of the spectacle lens 10. In a variant of the system S, the aperture P may be positioned on the rear face F2 of the spectacle lens 10 or behind the rear face F2 of the spectacle lens 10.

On figure 11, the spectacle lens 10 is positioned between the light emitting device I and the light capturing device C. The light emitting device I, the aperture P, the spectacle lens 10 and the light capturing device C are aligned.

The light source I is a laser source emitting in the monochromatic or polychromatic visible spectrum between 400 nm and 780 nm (λ), with a high-quality factor M² close to 1. Advantageously, the collimated beam emitted by the light source I has a wavelength between 540 to 560 nm, preferably a wavelength of 550 nm.

The collimated beam CB is generated by the light emitting device I along an axis A sensibly perpendicular to a plane normal to the surface of the spectacle lens 10 and centered on the geometrical center U₂₁ of the first zone 21 or on the geometrical center U₂₃ of the second zone 23. As shown on figure 11, the collimated beam illuminates the whole area of the first zone 21 or second zone 23 of the spectacle lens 10.

On figure 11, the spectacle lens 10 can be moved along a plane perpendicular to the axis A to select different specific zones of the spectacle lens 10 so as to measure the modulation transfer function on different portions of the spectacle lens 10, here typically to select the first zone 21 and then the second zone 23.

As the spectacle lens 10 is illuminated by a collimated beam the distant between the light emitting device I and the spectacle lens 10 can vary without changing substantially the determined modulation transfer function.

The light capture device C comprises at least a lens L and an image sensor Sb. The position of the lens L and the position of the sensor Sb can be adjusted in order to consider different analysis planes, for example to scan the spectacle lens 10 along the axis z (transverse axis).

The sensor Sb is configured to capture the image obtained by the collimated light beam generated by the light source I, and that is passed through the spectacle lens 10. Based on this captured image, one can determine the Point Spread Function (PSF) and then the Modulation Transfer Function of the first zone 21 or the second zone 21 of the spectacle lens 10 by computing the Fourier Transform of the Point Spread Function.

In another embodiment, the modulation transfer function of the first zone 21 or second zone 23 of the spectacle lens 10 is determined by measuring a surface relief of the face of the spectacle lens 10 comprising the micro-optical elements, here the front face 11 of the spectacle lens 10. Typically, the surface relief of the face can be determined using an interferometer. The difference of the optical path lengths of two points belonging to the selected zone (first 21 or second zone 23) is determined. To this end, the Optical Path Difference (OPD) of each point of the surface of the spectacle lens 10 can be obtained by multiplying a surface relief noted Z(x,y) with a refractive index-changing Δn corresponding to the difference of refractive index between both materials on either side of the surface with micro-optical elements. In a variant, one can compute the Point Spread Function and then the Modulation Transfer Function in different planes of the spectacle lens 10.

In a variant, simulated modulation transfer functions are estimated before the manufacturing process of the spectacle lens 10. In that case, the first zone 21 or the second zone 23 of the spectacle lens 10 is selected by a simulated aperture P' (i.e. a diaphragm) positioned on the optical design of the spectacle lens 10 or by projecting the pupil P' of the eye on the spectacle lens 10. In both cases, the diaphragm P' or the projection has a center that is centered on a potential central vision gaze of the wearer, for example for potential central vision gazes of the wearer comprised between 0 and 20 degrees defined from the two radial directions (axis x, y) of the spectacle lens 10. As shown on figure 3, the aperture P' is centered on a point disclosing a central vision gaze direction defined with the two angles (αC, βC). The aperture P' has a shape that coincides with the shape of the first zone 21 or the second zone 23. Thus, the aperture P' presents a geometric center that coincides with the geometric center U₂₁ of the first zone 21 when the modulation transfer function is estimated through the first zone 21 and the aperture P' presents a geometric center that coincides with the geometric center U₂₃ of the second zone 23 when the modulation transfer function is estimated through the second zone 23.

In the present disclosure, the diaphragm P or the simulated aperture P' has a center that is centered on a potential central vision gaze of the wearer, for example for potential central vision gazes of the wearer comprised between 0 and 20 degrees defined from two directions (axis x and axis y) of the spectacle lens 10. Typically, such angles correspond to points spaced from the center V10 of the spectacle lens 10 by a distance comprised between 0 millimeter and 30 millimeters corresponding typically to the gaze position in the spectacle lens 10 during reading with single vision lenses.

As for the method explained above, it is possible to compute the modulation transfer function on different specific zones (here the first 21 and second zone 23) of the simulated spectacle lens 10 by spatially scanning the field of view of the spectacle lens 10 using simulated aperture P' or projection P' defined for several central vision gaze directions. It allows measuring the modulation transfer function for different eccentricities of the vision gaze direction. In the present disclosure, the aperture P' delimiting a specific zone (here the first zone 21 or the second zone 23) has a circular shape having a diameter comprised between 4 millimeters and 8 millimeters to simulate the variation of the usual pupil size of a wearer, especially for simulated different luminous environments.

The density of the micro-optical elements comprised over the portion selected via the aperture (here the first zone 21 or second zone 23) is at least of 30%, typically comprised between 60% and 100% when the micro-optical elements are contiguous and comprised between 30% and 50% when the micro-optical elements are not contiguous.

The Point Spread Function (PSF) giving the degree of spreading (blurring) in the image of a point object throughout the first zone 21 and second zone 23 of the spectacle lens 10 is computed. The Point Spread Function is computed by simulations known to the skilled person, using a point source emitting in the monochromatic or polychromatic visible spectrum between 400 nm and 780 nm (λ), typically in a form of an ideal gaussian (M²=1), centered on the center V10 of the spectacle lens 10. For each wavelength λ, the point spread function is calculated as the squared magnitude of the inverse Fourier transform of an aperture function P'(x, y) defined as P'(x, y) = A(x, y)exp(ikOD(x, y)) simulating the simulated aperture P' and where k is the wave number (2π/λ), λ the wavelength of the point source preferably equal to 550 nm, A(x, y) is the amplitude of the pupil function that is equal to 1 for (x,y) in the pupil (defined by diameter & center position) and 0 outside the pupil, and OPD(x,y) corresponding to the optical path difference provided by the spectacle lens 10. Then, the modulation transfer function is computed based on the Fourier transform of the computed point spread function.

In the example shown on figure 6, the modulation transfer functions are computed or measured at a wavelength of 550 nm and in the first zone 21 and respectively in the second zone 23. As explained below, the modulation transfer function can be estimated for different eccentricities, for example eccentricities comprised between 4 millimeters and 30 millimeters when the central zone 14 of the spectacle lens 10 is free of any micro-optical element. If the central zone 14 of the spectacle lens 10 comprises micro-optical elements, the modulation transfer function can be further estimated for lower eccentricities, for example comprised between 0 (central gaze direction) and 4 millimeters.

In the present disclosure, although the zones are defined in specific part of the first peripheral zone 15, it is obvious that these zones can be defined in other parts of the spectacle lens 10 as long as this part comprised micro-optical element.

Figure 6 shows a graphical representation of the modulation transfer functions calculated throughout the first 21 and second 23 zones of the first peripheral zone 15 of the spectacle lens 10.

In the present disclosure, the modulation transfer functions are computed for spatial frequencies comprised between 0 cycle per degree and 60 cycles per degree. Typically, the spatial frequencies comprised between 0 and 30 cycles per degree, especially for the spatial frequencies comprised between 0 and 5 cycles per degree, between 5 and 10 cycles per degree, between 10 and 15 cycles per degree, between 15 and 20 cycles per degree and between 20 and 30 cycles per degree are involved in reading tasks In contrast, the spatial frequencies comprised between 0 and 7 cycles per degree are also involved in the visual acuity of the wearer. Generally, the low spatial frequencies will have an impact on the level of myopia control and the high spatial frequencies will have an impact on the visual acuity

The figure 6 illustrates on a same graphical:
- a horizontal axis profile 1001 of the modulation transfer function calculated throughout the first zone 21 of the spectacle lens 10,
- a vertical axis profile 1002 of the modulation transfer function calculated throughout the first zone 21 of the spectacle lens 10 and
- a horizontal axis profile 1003 of the modulation transfer function calculated throughout the second zone 23 of the first peripheral zone 15 of the spectacle lens 10, and
- a vertical axis profile 1004 of the modulation transfer function calculated throughout the second zone 23 of the first peripheral zone 15 of the spectacle lens 10.

In the present disclosure, the horizontal axis profile of the modulation transfer function corresponds to the variation of the modulation transfer function estimated or computed along the horizontal axis x of the spectacle lens 10. In the following, this profile is called horizontal modulation transfer function. Typically, the horizontal modulation transfer function corresponds to a cut view of the Fourier Transform of the Point Spread Function along the horizontal axis x of the spectacle lens 10. In contrast, the vertical axis profile of the modulation transfer function corresponds to the variation of the modulation transfer function computed or estimated along the vertical axis y of the spectacle lens 10. In the following, this profile is called vertical modulation transfer function. The vertical modulation transfer function corresponds to a cut view of the Fourier Transform of the Point Spread Function along the vertical axis y of the spectacle lens 10 .

On figure 6, the horizontal modulation transfer function 1001 comprises values higher than or equal to 0.95, 0.90, 0.85, 0.80, 0.75, 0.70, 0.65, 0.60 over the range of spatial frequencies comprised between 0 and 7 cycles per degree, preferably between 0 and 5 cycles per degree.

The horizontal modulation transfer function 1003 comprises values higher than or equal to 0.95, 0.90, 0.85, 0.80, 0.75, 0.70, 0.65, 0.60, 0.55, 0.50 over the range of spatial frequencies comprised between 0 and 7 cycles per degree, preferably between 0 and 5 cycles per degree.

It can also be seen that the modulation transfer function 1001 and the modulation transfer function 1003 comprise each values higher than 0.3 over the range of spatial frequencies comprised between 15 and 20 cycles per degree.

In the following, the wording modulation rate refers to the amplitude of the modulation transfer function. Thus, in the following the modulation rate are defined according to values of the considered modulation transfer function on a given range of spatial frequencies.

The horizontal modulation transfer function 1001 comprises a modulation rate higher than the modulation rate of the horizontal transfer function 1003 over the range of spatial frequencies comprised between 2 cycles per degree and 7 cycles per degree. In addition, the horizontal modulation transfer function 1001 comprises a modulation rate higher than the modulation rate of the horizontal transfer function 1003 over the range of spatial frequencies comprised between 10 and 20 cycles per degree, and between 20 and 30 cycles per degree. It means that, the horizontal modulation transfer function 1001 comprises a modulation rate higher than the modulation rate of the horizontal transfer function 1003 over the range of spatial frequencies comprised between 2 cycles per degree and 30 cycles per degree.

Typically, on figure 6, the modulation rate of the horizontal modulation transfer function 1001 differs by less than:
- 15 percent from the modulation rate of the horizontal modulation transfer function 1003 over the range of spatial frequencies comprised between 0 and 5 cycles per degree;
- 35 percent (here 31 percent) from the modulation rate of the horizontal modulation transfer function 1003 over the range of spatial frequencies comprised between 5 and 10 cycles per degree;
- 30 percent from the modulation rate of the horizontal modulation transfer function 1003 over the range of spatial frequencies comprised between 10 and 15 cycles per degree;
- 30 percent from the modulation rate of the horizontal modulation transfer function 1003 over the range of spatial frequencies comprised between 15 and 20 cycles per degree;
- 15 percent from the modulation rate of the horizontal modulation transfer function 1003 over the range of spatial frequencies comprised between 20 and 30 cycles per degree.

For a predetermined range of spatial frequencies, values of a first modulation transfer function and values of a second modulation transfer function differ by less than x% can mean that, for each frequency or each sub-range of the predetermined range, an absolute value of a ratio is inferior to x/100.

A numerator of the ratio is an absolute value of the difference between:
- a first value, the first value being a value of the modulation transfer function of the first zone and associated with the frequency or the sub-range and
- a second value, the second value being a value of the modulation transfer function of the second zone and associated with the sub-range,
and a denominator of the ratio is the first value or the second value. Preferably, the denominator comprises the highest value between the first and the second value.

The modulation rate of the horizontal modulation transfer function 1001 differs by more than 10 percent from the modulation rate of the horizontal modulation transfer function 1003 over the range of spatial frequencies comprised between 5 and 15 cycles per degree and 15 and 20 cycles per degree.

On figure 6, the vertical modulation transfer function 1002 comprises values higher than or equal to 0.95, 0.90, 0.85, 0.80, 0.75, 0.70, 0.65 over the range of spatial frequencies comprised between 0 and 7 cycles per degree, preferably between 1 and 5 cycles per degree.

The vertical modulation transfer function 1004 comprises values higher than or equal to 0.95, 0.90, 0.85, 0.80, 0.75, 0.70, 0.65, 0.60, 0.55, 0.50, 0.45 over the range of spatial frequencies comprised between 0 and 7 cycles per degree, preferably between 1 and 5 cycles per degree.

It can also be seen that the modulation transfer function 1001 and the modulation transfer function 1003 comprise each values higher than 0.3 over the range of spatial frequencies comprised between 15 and 20 cycles per degree.

The vertical modulation transfer function 1002 comprises a modulation rate higher than the modulation rate of the vertical transfer function 1004 over the range of spatial frequencies comprised between 2 cycles per degree and 7 cycles per degree. In addition, the vertical modulation transfer function 1002 comprises a modulation rate higher than the modulation rate of the vertical transfer function 1004 over the range of spatial frequencies comprised between 10 and 20 cycles per degree, and between 20 and 30 cycles per degree. It means that, the vertical modulation transfer function 1002 comprises a modulation rate higher than the modulation rate of the vertical transfer function 1004 over the range of spatial frequencies comprised between 2 cycles per degree and 30 cycles per degree.

Typically, on figure 6, the modulation rate of the vertical modulation transfer function 1002 differs by less than:
- 25 percent from the modulation rate of the vertical modulation transfer function 1004 over the range of spatial frequencies comprised between 0 and 5 cycles per degree;
- 30 percent from the modulation rate of the vertical modulation transfer function 1004 over the range of spatial frequencies comprised between 5 and 10 cycles per degree;
- 30 percent from the modulation rate of the vertical modulation transfer function 1004 over the range of spatial frequencies comprised between 10 and 15 cycles per degree;

- 30 percent from the modulation rate of the vertical modulation transfer function 1004 over the range of spatial frequencies comprised between 15 and 20 cycles per degree;
- 20 percent from the modulation rate of the vertical modulation transfer function 1004 over the range of spatial frequencies comprised between 20 and 30 cycles per degree.

Thus, the modulation rate of the vertical modulation transfer function 1002 differs by more than 10 percent from the modulation rate of the vertical modulation transfer function 1004 over the range of spatial frequencies comprised between 5 and 15 cycles per degree and between 15 and 20 cycles per degree.

### Second example

It will be disclosed in relation with figures 7 to 10 a second example of the spectacle lens 30 according to the present disclosure.

In this embodiment, the spectacle lens 30 comprises the central zone 14, the first peripheral zone 15, and the second peripheral zone 16 as disclosed in the previous embodiment shown on figure 4. In addition, the spectacle lens 30 comprises an arrangement of micro-optical elements positioned in the first peripheral zone 15 that is similar to the arrangement of micro-optical elements explained above on figure 4. Like the spectacle lens 10 shown on figure 4, the spectacle lens 30 comprises the first 21 and second 23 zones as explained above. Thus, only the differences with the embodiment shown on figures 4 and 5 are described.

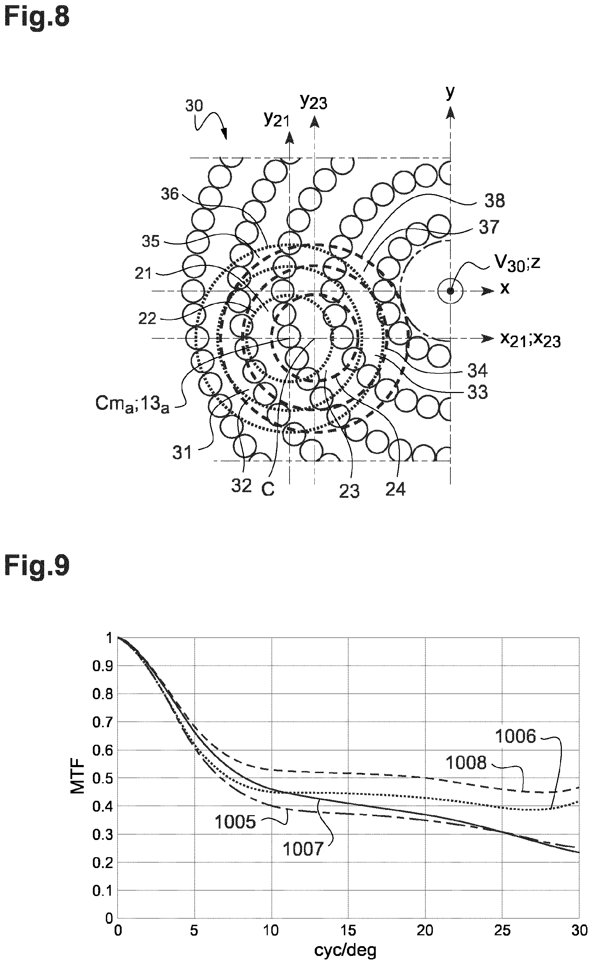

The spectacle lens 30 illustrated by figures 7 and 8 comprises a third zone 31 arranged in the first peripheral zone 15. The third zone 31 has a circular shape and is of 6 millimeters in diameter.

The third zone 31 comprises a part of the micro-optical elements of the first peripheral zone 15. Typically, the micro-optical elements comprised in the third zone 31 are arranged to cover at least 30 percent of the total area of the third zone 31. Here, the density of the micro-optical elements in the third zone 31 is higher than 41 percent.

The third zone 31 has an outer outline 32 presenting a geometrical center centered on the micro-optical axis Cm of one of micro-optical elements comprised in the third zone 31. Here, the geometric center of the third zone 31 coincides with the geometric center U₂₁ of the first zone 21. In other words, it means that the first 21 and the third 31 zones are concentric. Consequently, the third zone 31 is defined with the orthogonal frame of reference (U₂₁, x₂₁, y₂₁).

The first peripheral zone 15 further comprises a fourth zone 33 having a circular shape of 6 millimeters in diameter.

The fourth zone 33 comprises a part of the micro-optical elements of the first peripheral zone 15. Typically, the micro-optical elements comprised in the fourth zone 33 are arranged to cover at least 30 percent of the total area of the first zone. Here, the density of the micro-optical elements in the fourth zone 33 is higher than 31 percent.

The fourth zone 33 has an outer outline 34 presenting a geometrical center centered on the micro-optical axis Cm of one of the micro-optical elements comprised in the fourth zone 33. Here, the geometric center of the fourth zone 33 coincides with the geometric center U₂₃ of the second zone 23. It means that the second 23 and fourth 33 zones are concentric. Consequently, the fourth zone 33 is defined with the orthogonal frame of reference (U₂₃, x₂₃, y₂₃).

The first peripheral zone 15 further comprises a fifth zone 35 having a circular shape of 8 millimeters in diameter.

The fifth zone 35 comprises a part of the micro-optical elements of the first peripheral zone 15. Typically, the micro-optical elements comprised in the fifth zone 35 are arranged to cover at least 30 percent of the total area of the fifth zone. Here, the density of the micro-optical elements in the fifth zone 35 is higher than 35 percent.

The fifth zone 35 has an outer outline 36 presenting a geometrical center centered on the micro-optical axis Cm of one of the micro-optical elements comprised in the fifth zone 35. Here, the geometric center of the fifth zone 35 coincides with the geometric center U₂₁ of the first zone 21. It means that the third 21 and fifth 35 zones are concentric. Consequently, the fifth zone 35 is defined with the orthogonal frame of reference (U21, X21, y₂₁).

The first peripheral zone 15 further comprises a sixth zone 37 having a circular shape of 8 millimeters in diameter.

The sixth zone 37 comprises a part of the micro-optical elements of the first peripheral zone 15. Typically, the micro-optical elements comprised in the sixth zone 37 are arranged to cover at least 30 percent of the total area of the sixth zone. Here, the density of the micro-optical elements in the fifth zone 37 is higher than 36 percent.

The sixth zone 37 has an outer outline 38 presenting a geometrical center centered on the micro-optical axis Cm of one of the micro-optical elements comprised in the sixth zone 37. Here, the geometric center of the sixth zone 37 coincides with the geometric center U₂₃ of the second zone 23. It means that the second 23 and sixth 37 zones are concentric. Consequently, the sixth zone 37 is defined with the orthogonal frame of reference (U₂₃, x₂₃, y₂₃).

It will be disclosed, with reference to figures 9-10, technical features of the third 31, fourth 33, fifth 35 and sixth 37 zones.

Figure 9 shows a graphical representation of the modulation transfer functions calculated throughout the third 31 and fourth 33 zones of the first peripheral zone 15 of the spectacle lens.

The figure 9 illustrates on a same graphical:
- a horizontal axis profile 1005 of the modulation transfer function (hereafter referred to as horizontal modulation function 1005) calculated throughout the third zone 31 of the spectacle lens 10,
- a vertical axis profile 1006 of the modulation transfer function (hereafter referred to as vertical modulation function 1006) calculated throughout the third zone 31 of the spectacle lens 10,
- a horizontal axis profile 1007 of the modulation transfer function (hereafter referred to as horizontal modulation function 1007) calculated throughout the fourth zone 33 of the first peripheral zone 15 of the spectacle lens 10, and
- a vertical axis profile 1008 of the modulation transfer function (hereafter referred to as vertical modulation function 1008) calculated throughout the fourth zone 33 of the first peripheral zone 15 of the spectacle lens 10.

On figure 9, the horizontal modulation transfer function 1005 comprises values higher than or equal to 0.95, 0.90, 0.85, 0.80, 0.75, 0.70, 0.65, 0.60, 0.55 over the range of spatial frequencies comprised between 0 and 7 cycles per degree, preferably between 1 and 5 cycles per degree.

The horizontal modulation transfer function 1007 comprises values higher than or equal to 0.95, 0.90, 0.85, 0.80, 0.75, 0.70, 0.65, 0.60, 0.57, over the range of spatial frequencies comprised between 0 and 7 cycles per degree, preferably between 1 and 5 cycles per degree.

It can also be seen that the horizontal modulation transfer function 1005 and the horizontal modulation transfer function 1007 comprise each values higher than 0.3 over the range of spatial frequencies comprised between 15 and 20 cycles per degree (here higher than 0.35).

The horizontal modulation transfer function 1007 comprises a modulation rate higher than the modulation rate of the horizontal transfer function 1005 over the range of spatial frequencies comprised between 2 cycles per degree and 7 cycles per degree. In addition, the horizontal modulation transfer function 1007 comprises a modulation rate higher than the modulation rate of the horizontal transfer function 1005 over the range of spatial frequencies comprised between 10 and 20 cycles per degree, and between 20 and 25 cycles per degree. It means that, the horizontal modulation transfer function 1007 comprises a modulation rate higher than the modulation rate of the horizontal transfer function 1005 over the range of spatial frequencies comprised between 2 cycles per degree and 25 cycles per degree. For the spatial frequencies comprised between 24 and 26 cycles per degree, the two horizontal transfer functions 1005, 1007 present a same modulation rate having a value comprised between 0.33 and 0.28. The horizontal modulation transfer function 1007 comprises a modulation rate lower than the modulation rate of the horizontal transfer function 1005 over the range of spatial frequencies comprised between 27 and 30 cycles per degree

Typically, on figure 9, the modulation rate of the horizontal modulation transfer function 1007 differs by less than:
- 10 percent (here 7 percent) from the modulation rate of the horizontal modulation transfer function 1005 over the range of spatial frequencies comprised between 0 and 5 cycles per degree;
- 12 percent from the modulation rate of the horizontal modulation transfer function 1005 over the range of spatial frequencies comprised between 5 and 10 cycles per degree;
- 10 percent from the modulation rate of the horizontal modulation transfer function 1005 over the range of spatial frequencies comprised between 10 and 15 cycles per degree;

- 10 percent from the modulation rate of the horizontal modulation transfer function 1005 over the range of spatial frequencies comprised between 15 and 20 cycles per degree;
- 10 percent from the modulation rate of the horizontal modulation transfer function 1005 over the range of spatial frequencies comprised between 20 and 30 cycles per degree.

Thus, the modulation rates of the horizontal modulation transfer functions 1005, 1007 are nearly identical with a tolerance of less than 10 percent over the range of spatial frequencies comprised between 0 and 30 cycles per degree. Specifically, the modulation rates of the horizontal modulation transfer functions 1005, 1007 are nearly identical with a tolerance of less than:
- 10 percent over the range of spatial frequencies comprised between 2 and 5 cycles per degree;
- 12 percent over the range of spatial frequencies comprised between 5 and 10 cycles per degree;
- 10 percent over the range of spatial frequencies comprised between 10 and 15 cycles per degree;
- 10 percent over the range of spatial frequencies comprised between 15 and 20 cycles per degree;
- 12 percent over the range of spatial frequencies comprised between 20 and 30 cycles per degree.

Thus, the horizontal modulation transfer functions 1005, 1007 of the third 31 and fourth 33 zones present modulation rates that are closer than the modulation rates of the horizontal modulation transfer functions 1001, 1003 of the first 21 and second 23 zones.

The horizontal modulation transfer functions 1005, 1007 of the third 31 and fourth 33 zones are nearly identical.

On figure 9, the vertical modulation transfer function 1006 comprises values higher than or equal to 0.95, 0.90, 0.85, 0.80, 0.75, 0.70, 0.65 over the range of spatial frequencies comprised between 0 and 7 cycles per degree, preferably between 1 and 5 cycles per degree.

The vertical modulation transfer function 1008 comprises values higher than or equal to 0.95, 0.90, 0.85, 0.80, 0.75, 0.70, 0.65, 0.60, 0.55, 0.50, 0.45 over the range of spatial frequencies comprised between 0 and 7 cycles per degree, preferably between 1 and 5 cycles per degree.

It can also be seen that the vertical modulation transfer function 1006 and the vertical modulation transfer function 1008 have each values higher than 0.3 over the range of spatial frequencies comprised between 15 and 20 cycles per degree (here higher than 0.35).

The vertical modulation transfer function 1008 comprises a modulation rate higher than the modulation rate of the vertical transfer function 1006 over the range of spatial frequencies comprised between 2 cycles per degree and 7 cycles per degree. In addition, the vertical modulation transfer function 1008 comprises a modulation rate higher than the modulation rate of the vertical transfer function 1006 over the range of spatial frequencies comprised between 10 and 20 cycles per degree, and between 20 and 30 cycles per degree. The vertical modulation transfer function 1008 comprises a modulation rate higher than the modulation rate of the vertical transfer function 1006 over the range of spatial frequencies comprised between 2 cycles per degree and 30 cycles per degree.

Typically, on figure 9, the modulation rate of the vertical modulation transfer function 1006 differs by less than:
- 20 percent from the modulation rate of the vertical modulation transfer function 1008 over the range of spatial frequencies comprised between 0 and 5 cycles per degree;
- 20 percent (here 15 percent) from the modulation rate of the vertical modulation transfer function 1008 over the range of spatial frequencies comprised between 5 and 10 cycles per degree;
- 20 percent from the modulation rate of the vertical modulation transfer function 1008 over the range of spatial frequencies comprised between 10 and 15 cycles per degree;
- 20 percent from the modulation rate of the vertical modulation transfer function 1008 over the range of spatial frequencies comprised between 15 and 20 cycles per degree;
- 20 percent from the modulation rate of the vertical modulation transfer function 1008 over the range of spatial frequencies comprised between 20 and 30 cycles per degree.

Thus, the modulation rates of the vertical modulation transfer functions 1006, 1008 are nearly identical with a tolerance of less than 20 percent over the range of spatial frequencies comprised between 2 and 30 cycles per degree. Specifically, the modulation rates of the vertical modulation transfer functions 1006, 1008 are nearly identical with a tolerance of less than:
- 20 percent over the range of spatial frequencies comprised between 2 and 5 cycles per degree;
- 20 percent (here 15 percent) over the range of spatial frequencies comprised between 5 and 10 cycles per degree;
- 20 percent over the range of spatial frequencies comprised between 10 and 15 cycles per degree;
- 20 percent over the range of spatial frequencies comprised between 15 and 20 cycles per degree;
- 20 percent over the range of spatial frequencies comprised between 20 and 30 cycles per degree.

Thus, the values of the vertical modulation transfer function differ by more than 10 percent over the range of spatial frequencies comprised between 2 and 5 cycles per degree, 5 and 15 cycles per degree, 15 and 20 cycles per degree.

Figure 10 shows a graphical representation of the modulation transfer functions calculated throughout the fourth zone 35 and sixth zone 37 of the first peripheral zone 15 of the spectacle lens.

The figure 10 illustrates on a same graphical:
- a horizontal axis profile 1009 of the modulation transfer function (hereafter referred to as horizontal modulation function 1009) calculated throughout the fourth zone 35 of the spectacle lens 10,
- a vertical axis profile 1010 of the modulation transfer function (hereafter referred to as vertical modulation function 1010) calculated throughout the fourth zone 35 of the spectacle lens 10 and
- a horizontal axis profile 1011 of the modulation transfer function (hereafter referred to as horizontal modulation function 1011) calculated throughout sixth zone 37 of the first peripheral zone 15 of the spectacle lens 10, and
- a vertical axis profile 1012 of the modulation transfer function (hereafter referred to as vertical modulation function 1012) calculated throughout sixth zone 37 of the first peripheral zone 15 of the spectacle lens 10.

On figure 10, the horizontal modulation transfer function 1009 comprises values higher than or equal to 0.95, 0.90, 0.85, 0.80, 0.75, 0.70, 0.65, 0.60, 0.55 over the range of spatial frequencies comprised between 0 and 7 cycles per degree, preferably between 1 and 5 cycles per degree.

The horizontal modulation transfer function 1011 comprises values higher than or equal to 0.95, 0.90, 0.85, 0.80, 0.75, 0.70, 0.65, 0.60, 0.57, over the range of spatial frequencies comprised between 0 and 7 cycles per degree, preferably between 1 and 5 cycles per degree.

It can also be seen that the horizontal modulation transfer function 1009 and the horizontal modulation transfer function 1011 have each values higher than 0.3 over the range of spatial frequencies comprised between 15 and 20 cycles per degree (here higher than 0.35).

The horizontal modulation transfer function 1009 comprises a modulation rate lower than the modulation rate of the horizontal transfer function 1011 over the range of spatial frequencies comprised between 2 cycles per degree and 7 cycles per degree. In addition, the horizontal modulation transfer function 1009 comprises a modulation rate lower than the modulation rate of the horizontal transfer function 1011 over the range of spatial frequencies comprised between 5 and 12 cycles per degree. The horizontal modulation transfer function 1009 comprises a modulation rate lower than the modulation rate of the horizontal transfer function 1011 over the range of spatial frequencies comprised between 2 cycles per degree and 13 cycles per degree. For the spatial frequencies comprised between 13 and 14 cycles per degree, the two horizontal transfer functions 1009, 1011 present a same modulation rate having a value comprised between 0.41 and 0.43.For the spatial frequencies comprised between 14 and 30 cycles per degree, the horizontal modulation transfer function 1009 comprises a modulation rate higher than the modulation rate of the horizontal transfer function 1011 over the range of spatial frequencies comprised between 15 and 30 cycles per degree

Typically, on figure 10, the modulation rate of the horizontal modulation transfer function 1009 differs by less than:
- 5 percent from the modulation rate of the horizontal modulation transfer function 1011 over the range of spatial frequencies comprised between 0 and 5 cycles per degree;
- 5 percent from the modulation rate of the horizontal modulation transfer function 1011 over the range of spatial frequencies comprised between 5 and 10 cycles per degree;
- 5 percent from the modulation rate of the horizontal modulation transfer function 1011 over the range of spatial frequencies comprised between 10 and 15 cycles per degree;
- 10 percent from the modulation rate of the horizontal modulation transfer function 1011 over the range of spatial frequencies comprised between 15 and 20 cycles per degree;
- 12 percent from the modulation rate of the horizontal modulation transfer function 1011 over the range of spatial frequencies comprised between 20 and 30 cycles per degree.

Thus, the modulation rates of the horizontal modulation transfer functions 1009, 1011 are nearly identical with a tolerance of less than 12 percent over the range of spatial frequencies comprised between 2 and 30 cycles per degree.

The horizontal modulation transfer functions 1009, 1011 of the fifth 35 and sixth 37 zones present modulation rates that are closer than the modulation rates of the horizontal modulation transfer functions 1005, 1007 of the third 31 and fourth 33 zones.

On figure 10, the vertical modulation transfer function 1010 comprises values higher than or equal to 0.95, 0.90, 0.85, 0.80, 0.75, 0.70, 0.65,0.60 over the range of spatial frequencies comprised between 0 and 7 cycles per degree, preferably between 1 and 5 cycles per degree.

The vertical modulation transfer function 1012 comprises values higher than or equal to 0.95, 0.90, 0.85, 0.80, 0.75, 0.70, 0.65, 0.60, 0.55, over the range of spatial frequencies comprised between 0 and 7 cycles per degree, preferably between 1 and 5 cycles per degree.

It can also be seen that the vertical modulation transfer function 1012 and the vertical modulation transfer function 1010 comprise each values higher than 0.4 over the range of spatial frequencies comprised between 15 and 20 cycles per degree (here higher than 0.50).

The vertical modulation transfer function 1010 comprises a modulation rate higher than the modulation rate of the vertical transfer function 1012 over the range of spatial frequencies comprised between 2 cycles per degree and 30 cycles per degree.

Typically, on figure 10, the modulation rate of the vertical modulation transfer function 1010 differs by less than:
- 5 percent from the modulation rate of the vertical modulation transfer function 1012 over the range of spatial frequencies comprised between 0 and 5 cycles per degree;
- 7 percent from the modulation rate of the vertical modulation transfer function 1012 over the range of spatial frequencies comprised between 5 and 30 cycles per degree;

Thus, the modulation rates of the vertical modulation transfer functions 1010, 1011 are nearly identical with a tolerance of less than 7 percent over the range of spatial frequencies comprised between 2 and 30 cycles per degree.

### Third example

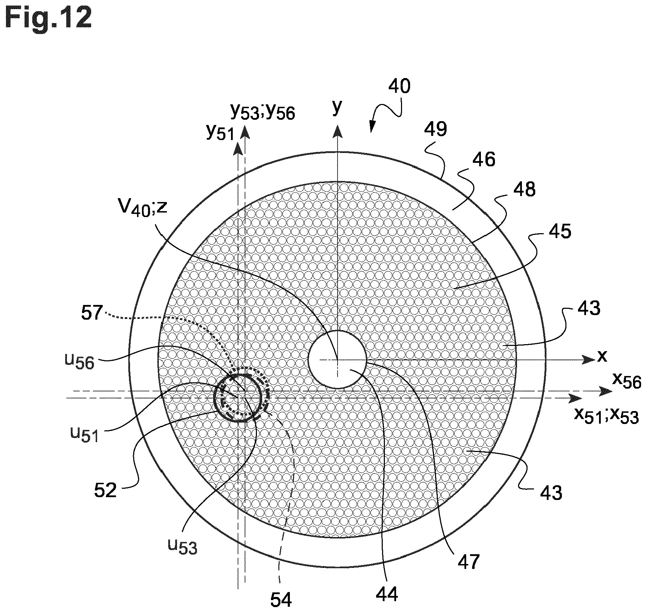

It will be disclosed in relation with figures 12 to 15 a third example of the spectacle lens 40 according to the present disclosure. Only the differences with the figure 4 are described.

The spectacle lens 40 is divided in three zones: a central zone 44, a first peripheral zone 45 and a second peripheral zone 46. The first peripheral zone 45 comprises an arrangement of micro-optical elements 43 having at least one optical feature.

The optical feature of the micro-optical elements 43 of first peripheral zone 45 comprises at least one of the following optical features: dioptric power; geometry; refractive, diffractive or diffusive optical function; focal length; diameter or size; position.

The central zone 44, the first peripheral zone 45 and the second peripheral zone 46 are concentric. They are centered on the optical center V40 of the spectacle lens 40. The first peripheral zone 45 surrounds the central zone 44 and is bounded internally by the circular outline 47 of the central zone 44 and externally by a circular outline 48. The second peripheral zone 46 surrounds the first peripheral zone 45 and is bounded internally by the circular outline 48 of the first peripheral zone 45 and externally by a circular outline 49 which coincides with an outer edge of the spectacle lens 40.

The outer circular outline 47 of the central zone 44 presents a diameter of 4 millimeters. The inner circular outline of the first peripheral zone 45 presents a diameter of 4 millimeters. The outer circular outline 48 of the first peripheral zone 45 presents a diameter of 60.0 millimeters. The inner outline of the second peripheral zone 46 presents a diameter of 60.0 millimeters and the outer edge 49 presents a diameter of 70.00 millimeters.

In this embodiment, the micro-optical elements of the spectacle lens 40 are contiguous refractive microlenses of 0.60 millimeters diameter and having a dioptric power of +4 diopters.

The first peripheral zone 45 comprises:
- a first zone 51 (U₅₁, x₅₁, y₅₁) having a circular shape of 4 millimeters diameter;
- a second zone 53 (U₅₃, x₅₃, y₅₃) having a circular shape of 4 millimeters diameter; and
- a third zone 56 (U₅₆, x₅₆, y₅₆) having a circular shape of 4 millimeters diameter.

As for the example explained above, the first zone 51, and respectively the second zone 53 and the third zone 56 comprise each a portion or a part of the micro-optical elements of the first peripheral zone 45. Typically, the micro-optical elements comprised in the first zone 51 are arranged to cover at least 60 percent of the total area of the first zone 51,respectively the micro-optical elements comprised in the second zone 53 are arranged to cover at least 60 percent of the total area of the second zone 53 and respectively the micro-optical elements comprised in the third zone 56 are arranged to cover at least 60 percent of the total area of the third zone 56.

The first zone 51 has an outer outline 52 presenting a geometrical center U₅₁ that is centered on the micro-optical axis Cma a micro-optical element 43a spaced by 9.8 millimeters from the center V40 of the spectacle lens 40.

The second zone 53 has an outer outline 54 presenting a geometrical center U₅₃ that is spaced between 0.10 millimeter and 2.00 millimeters (± 0.075mm) from the geometric center U₅₁ of the first zone 51. Here, the geometrical center U₅₃ is spaced from the geometric center U₅₁ of the first zone 21 by 0.30 millimeter (± 0.075mm). Especially, the axis y₅₃ of the second zone 53 is spaced from 0.30 millimeter from the axis y₅₁. The vertical axis x₅₁ of the first zone 51 coincides with the axis x₅₃ of the second zone 53. It means that the center U₅₃ of the second zone 53 is spaced from the center U₅₁ of the first zone 51 along the horizontal axes x₅₁, Xss.

Typically, the geometric center U₅₃ is centered on a point D positioned between the edges of two contiguous micro-optical elements noted respectively 43a, 43b. The geometric center U53 of the second zone 53 is spaced by at least 8.7 millimeters from the geometric center V40 of the spectacle lens 40.

The third zone 56 has an outer outline 57 presenting a geometrical center U₅₆ that is spaced between 0.10 millimeter and 2.00 millimeters (± 0.075mm) from the geometric center U51 of the first zone 51 and/or from the geometric center U53 of the second zone U53. Here, the geometrical center U56 is spaced from the geometric center U₅₁ of the first zone 51 by 0.35 millimeter (± 0.075mm) and from the geometric center U₅₃ of the second zone by 0.17 millimeter (± 0.075mm). In this example, the vertical axis y₅₃ of the second zone 53 coincides with the axis y₅₆ of the third zone 56. It means that the center U₅₆ of the third zone 56 is spaced from the center U₅₃ of the second zone 53 by 0.17 millimeter along the axes y₅₆, yss.

Typically, the geometric center U₅₆ is centered on a point E positioned between the edges of three contiguous micro-optical elements noted respectively 43a, 43b, 43c. The geometric center U₅₃ of the second zone 53 is spaced by at least 8.7 millimeters from the geometric center V40 of the spectacle lens 40.

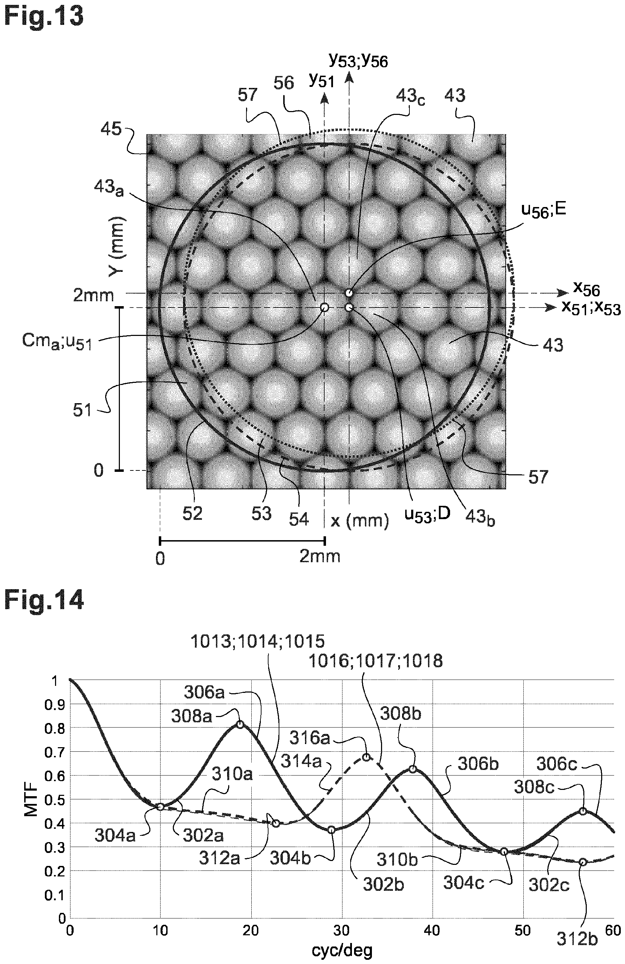

It will be disclosed, with reference to figure 14, technical features of the first 51, second 53 and third 56 zones. The technical features of the first zone 51,the second zone 53 and the third zone 56 are studied via the modulation transfer function computed or estimated as explained above in the first example.

Figure 14 shows a graphical representation of the modulation transfer functions calculated throughout the first 51, second 53 and third 56 zones of the first peripheral zone 45 of the spectacle lens 40.

The figure 14 illustrates on a same graphical:
- a horizontal axis profile 1013 of the modulation transfer function (hereafter referred to as horizontal modulation function 1013) calculated throughout the first zone 51 of the spectacle lens 40,
- a horizontal axis profile 1014 of the modulation transfer function (hereafter referred to as horizontal modulation function 1014) calculated throughout the second zone 53 of the spectacle lens 40,
- a horizontal axis profile 1015 of the modulation transfer function (hereafter referred to as horizontal modulation function 1015) calculated throughout the third zone 56 of the spectacle lens 40,
- a vertical axis profile 1016 of the modulation transfer function (hereafter referred to as horizontal modulation function 1016) calculated throughout the first zone 51 of the spectacle lens 40,
- a vertical axis profile 1017 of the modulation transfer function (hereafter referred to as horizontal modulation function 1017) calculated throughout the second zone 53 of the spectacle lens 40,
- a vertical axis profile 1018 of the modulation transfer function (hereafter referred to as horizontal modulation function 1018) calculated throughout the third zone 56 of the spectacle lens 40.

On figure 14, the horizontal modulation transfer function 1013, the horizontal modulation transfer function 1014 and the horizontal modulation transfer function 1015 overlap within a tolerance lower than 5 percent.

Consequently, it means that the modulation rate of the horizontal modulation transfer function 1013 differs by less than 40 percent (here by less 10 percent) of the modulation rate of the horizontal modulation transfer function 1014 and of the modulation rate of the horizontal modulation transfer function 1015 over the range of spatial frequencies comprised between 0 and 60 cycles per degree, especially over the range of spatial frequencies comprised between 5 and 15 cycles per degree, and 15 and 25 cycles per degree, and 25 and 35 cycles per degree and between 35 and 45 cycles per degree and 45 and 55 cycles per degree and between 55 and 60 cycles per degree. In other words, the modulation rate of horizontal modulation transfer function 1013, the modulation rate of the horizontal modulation transfer function 1014 and the modulation rate of the horizontal modulation transfer function 1015 are nearly identical over the range of spatial frequencies comprised between 0 and 60 cycles per degree.

The horizontal modulation transfer function 1013, the horizontal modulation transfer function 1014 and the horizontal modulation transfer function 1015 have each 3 valleys over the range of spatial frequencies comprised between 5 and 60 cycles per degree and 3 peaks over the range of spatial frequencies comprised between 5 and 60 cycles per degree. The horizontal modulation transfer function 1013, the horizontal modulation transfer function 1014 and the horizontal modulation transfer function 1015 present each a modulation rate.

The horizontal modulation transfer function 1013, the horizontal modulation transfer function 1014 and the horizontal transfer function 1015 have each values higher than 0.6 over the range of spatial frequencies comprised between 0 and 7 cycles per degree, especially over the range of spatial frequencies comprised between 1 and 5 cycles per degree.

It can also be seen that the horizontal modulation transfer function 1013, the horizontal modulation transfer function 1014 and the horizontal transfer function 1015 have each values higher than 0.4 over the range of spatial frequencies comprised between 15 and 20 cycles per degree (here higher than 0.5).

In this example, each of the horizontal modulation transfer functions 1013, 1014, 1015 presents:
- a first valley 302a over the range of spatial frequencies comprised between 5 and 15 cycles per degree presenting a minimum value 304a equal to 0.47 at the spatial frequency of 10 cycles per degree;
- a second valley 302b over the range of spatial frequencies comprised between 25 and 35 cycles per degree presenting a minimum value 304b equal to 0.38 at the spatial frequency of 28 cycles per degree;
- a third valley 302c over the range of spatial frequencies comprised between 45 and 55 cycles per degree presenting a minimum value 304c equal to 0.28 at the spatial frequency of 58 cycles per degree.

In addition, each of the horizontal modulation transfer function 1013, 1014, 1015 presents:
- a first peak 306a over the range of spatial frequencies comprised between 15 and 25 cycles per degree presenting a maximum value 308a equal to 0.82 at the spatial frequency of 18 cycles per degree;
- a second peak 306b over the range of spatial frequencies comprised between 35 and 45 cycles per degree presenting a maximum value 308b equal to 0.62 at the spatial frequency of 47 cycles per degree;
- a third peak 306c over the range of spatial frequencies comprised between 55 and 60 cycles per degree presenting a maximum value 308c equal to 0.45 at the spatial frequency of 56 cycles per degree.

Thus, the horizontal modulation transfer function 1013, 1014, 1015 present each values over the range of spatial frequencies comprised 15 and 25 cycles per degree that are higher by at least 10 percent than the values of the horizontal modulation transfer function 1013, 1014, 1015 over the range of spatial frequencies comprised 5 and 12 cycles per degree. Similarly, the horizontal modulation transfer function 1013, 1014, 1015 present each values over the range of spatial frequencies comprised 35 and 45 cycles per degree that are higher by at least 10 percent than the values of the horizontal modulation transfer function 1013, 1014, 1015 over the range of spatial frequencies comprised 25 and 32 cycles per degree. The horizontal modulation transfer function 1013, 1014, 1015 present each values over the range of spatial frequencies comprised 55 and 60 cycles per degree that are higher by at least 10 percent than the values of the horizontal modulation transfer function 1013, 1014, 1015 over the range of spatial frequencies comprised 45 and 52 cycles per degree.

The vertical modulation transfer function 1016, and the vertical modulation transfer function 1017 and the vertical modulation transfer function 1018 present each a modulation rate.

On figure 14, the vertical modulation transfer function 1016, the vertical modulation transfer function 1017 and the vertical modulation transfer function 1018 overlap within a tolerance lower than 5 percent.

It means that the modulation rate of the vertical modulation transfer function 1016 differs by less than 40 percent (here 5 percent) of the modulation rate of the vertical modulation transfer function 1017 and of the modulation rate of the vertical modulation transfer function 1018 over the range of spatial frequencies comprised between 0 and 60 cycles per degree.

In other words, the modulation rate of vertical modulation transfer function 1016, the modulation rate of the vertical modulation transfer function 1017 and the modulation rate of the vertical modulation transfer function 1018 are nearly identical over the range of spatial frequencies comprised between 0 and 60 cycles per degree.

The vertical modulation transfer function 1016, the vertical modulation transfer function 1017 and the vertical modulation transfer function 1018 have each values higher than 0.6 over the range of spatial frequencies comprised between 0 and 7 cycles per degree, especially over the range of spatial frequencies comprised between 1 and 5 cycles per degree.

It can also be seen that vertical modulation transfer function 1016, the vertical modulation transfer function 1017 and the vertical modulation transfer function 1018 have each values higher than 0.4 over the range of spatial frequencies comprised between 15 and 20 cycles per degree.

The vertical modulation transfer function 1016, the vertical modulation transfer function 1017 and the vertical modulation transfer function 1018 have each 2 valleys over the range of spatial frequencies comprised between 5 and 60 cycles per degree and 1 peak over the range of spatial frequencies comprised between 5 and 60 cycles per degree.

Especially, each of the vertical modulation transfer functions 1016, 1017, 1018 presents:
- a first valley 310a over the range of spatial frequencies comprised between 5 and 25 cycles per degree presenting a minimum value 312a equal to 0.40 at the spatial frequency of 23 cycles per degree;
- a second valley 310b over the range of spatial frequencies comprised between 38 and 60 cycles per degree presenting a minimum value 312b equal to 0.24 at the spatial frequency of 57 cycles per degree;

In addition, each of the vertical modulation transfer functions 1016, 1017, 1018 presents a peak 314a over the range of spatial frequencies comprised between 25 and 40 cycles per degree presenting a maximum value 316a equal to 0.68 at the spatial frequency of 33 cycles per degree.

Consequently, it means that the modulation rate of the vertical modulation transfer function 1016 differs by less than 40 percent (here 10 percent) of the modulation rate of the vertical modulation transfer function 1017 and of the modulation rate of the vertical modulation transfer function 1018 over the range of spatial frequencies comprised between 0 and 60 cycles per degree.

The vertical modulation transfer function 1016, 1017, 1018 present each values over the range of spatial frequencies comprised 25 and 40 cycles per degree that are higher by at least 10 percent than the values of the vertical modulation transfer function 1016, 1017, 1018 over the range of spatial frequencies comprised 5 and 23 cycles per degree.

Thus, in this example, it can be seen that the values of the different vertical modulation transfer functions are nearly identical and the different horizontal modulation transfer function are nearly identical within a tolerance of 5 percent.

### Fourth example

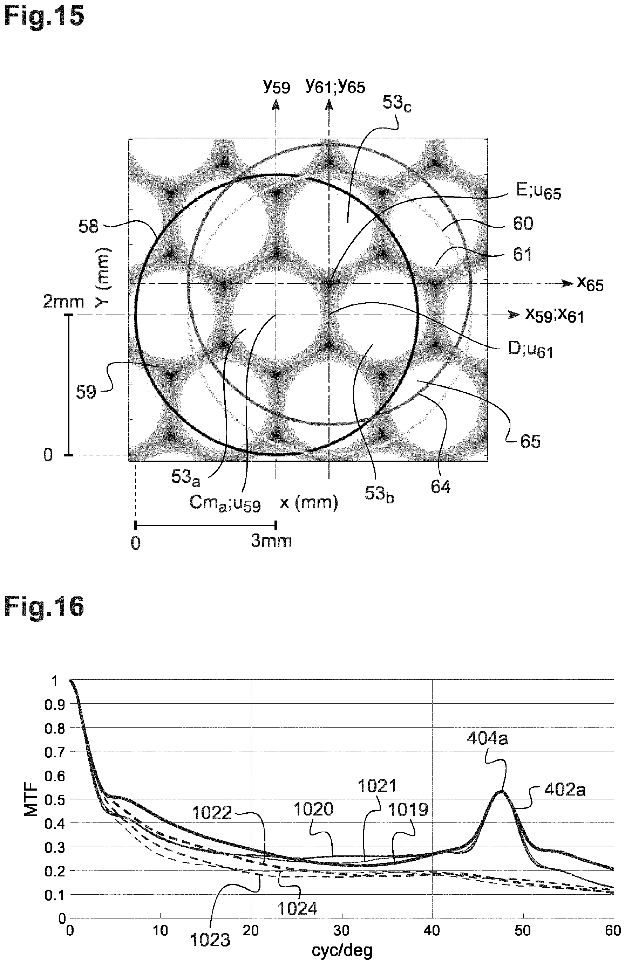

It will be disclosed in relation with figures 15-16 a variant of the third example of the spectacle lens according to the present disclosure. Only the differences with the figures 12-14 are described.

In this example, the spectacle lens comprises a similar design of the spectacle lens 40 shown on figures 12 and 13. Specifically, in this variant, the micro-optical elements of the spectacle lens are contiguous refractive bifocal micro-optical elements having a diameter of 1.50 millimeters and dioptric power of +4 diopters at the periphery of the micro-optical element and 0 diopter at the center of the micro-optical element.

In this embodiment, the spectacle lens comprises a first zone 59 (U₅₉, x₅₉, y₅₉), a second zone 61 (U61, x₆₁, y₆₁) and a third zone 65 (U65, x₆₅, y₆₅). The first 59, second 61 and third 65 zones have each a circular shape of 4 millimeters in diameter.

As for the example explained above, the first zone 59, and respectively the second zone 61 and the third zone 65 comprise each a portion or a part of the micro-optical elements of the first peripheral zone. Typically, the micro-optical elements comprised in the first zone 59 are arranged to cover at least 60 percent of the total area of the first zone 59, respectively the micro-optical elements comprised in the second zone 61 are arranged to cover at least 60 percent of the total area of the second zone 61 and respectively the micro-optical elements comprised in the third zone 65 are arranged to cover at least 60 percent of the total area of the third zone 65.

The first zone 59 has an outer outline 58 presenting a geometrical center U₅₉ that is centered on the micro-optical axis Cma of a micro-optical element 53a spaced by 9.0 millimeters from the center of the spectacle lens.

The second zone 61 has an outer outline 60 presenting a geometrical center U₆₁ that is spaced between 0.10 millimeter and 2.00 millimeters (± 0.075mm) from the geometric center U₅₉ of the first zone 59. Here, the geometrical center U61 is spaced from the geometric center U59 of the first zone 59 by 0.75 millimeter (± 0.075mm). In this example, the axis x₅₉ of the first zone 59 coincides with the axis x₆₁ of the second zone 61. It means that the center U₆₁ of the second zone 61 is spaced from the center U₅₉ of the first zone 59 along the (horizontal) axes x₅₉, x₆₁.

Typically, the geometric center U₆₁ is centered on a point D positioned between two micro-optical element 53a, 53b. The geometric center U₆₁ of the second zone 61 is spaced by at least 9.7 millimeters from the geometric center of the spectacle lens shown on figure 15.

The third zone 65 has an outer outline 64 presenting a geometrical center U65 that is spaced between 0.10 millimeter and 2.00 millimeters (± 0.075mm) from the geometric center U₅₉ of the first zone 59 and/or from the geometric center U₆₁ of the second zone 61. Here, the geometrical center U₆₅ is spaced from the geometric center U₅₉ of the first zone 59 by 0.86 millimeter (± 0.075mm) and from the geometric center U₆₁ of the second zone by 0.43 millimeter (± 0.075mm). In this example, the vertical axis y₆₁ of the second zone 61 coincides with the axis y₆₅ of the third zone 65. It means that the center U₆₅ of the third zone 65 is spaced from the center U₆₁ of the second zone 61 by 0.43 millimeter along the axes y₆₁, yes.

Typically, the geometric center U₆₅ is centered on a point E positioned between the edges of three contiguous micro-optical elements noted respectively 53a, 53b, 53c. The geometric center U₆₅ of the third zone 65 is spaced by at least 9.76 millimeters from the geometric center of the spectacle lens.

It will be disclosed, with reference to figure 16, technical features of the first 59, second 61 and third zone 65. The technical features of the first zone 59, second zone 61 and the third zone 65 are studied via the modulation transfer function computed or estimated as explained above in the first example.

Figure 16 shows a graphical representation of the modulation transfer functions calculated throughout the first 59, second 61 and third 65 zones of the first peripheral zone of the spectacle lens.

The figure 16 illustrates on a same graphical:
- a horizontal axis profile 1019 of the modulation transfer function (hereafter referred to as horizontal modulation function 1019) calculated throughout the first zone 59 of the spectacle lens,
- a horizontal axis profile 1020 of the modulation transfer function (hereafter referred to as horizontal modulation function 1020) calculated throughout the second zone 61 of the spectacle lens,
- a horizontal axis profile 1021 of the modulation transfer function (hereafter referred to as horizontal modulation function 1021) calculated throughout the third zone 65 of the spectacle lens,
- a vertical axis profile 1022 of the modulation transfer function (hereafter referred to as horizontal modulation function 1022) calculated throughout the first zone 59 of the spectacle lens,
- a vertical axis profile 1023 of the modulation transfer function (hereafter referred to as horizontal modulation function 1023) calculated throughout the second zone 61 of the spectacle lens,
- a vertical axis profile 1024 of the modulation transfer function (hereafter referred to as horizontal modulation function 1024) calculated throughout the third zone 65 of the spectacle lens.

The horizontal modulation transfer function 1019, the horizontal modulation transfer function 1020 and the horizontal transfer function 1021 have each values higher than 0.4 over the range of spatial frequencies comprised between 0 and 7 cycles per degree, especially over the range of spatial frequencies comprised between 1 and 5 cycles per degree.

It can also be seen that the horizontal modulation transfer function 1019, the horizontal modulation transfer function 1020 and the horizontal transfer function 1021 have each values higher than 0.25 over the range of spatial frequencies comprised between 15 and 20 cycles per degree.

The horizontal modulation transfer function 1019, the horizontal modulation transfer function 1020 and the horizontal modulation transfer function 1021 present each a modulation rate.

The modulation rate of the horizontal modulation transfer function 1019 differs by less than 40 percent (here by less 25 percent) of the modulation rate of the horizontal modulation transfer function 1020 and of the modulation rate of the horizontal modulation transfer function 1021 over the range of spatial frequencies comprised between 0 and 60 cycles per degree. In other words, the modulation rate of horizontal modulation transfer function 1019, the modulation rate of the horizontal modulation transfer function 1020 and the modulation rate of the horizontal modulation transfer function 1021 are nearly identical over the range of spatial frequencies comprised between 0 and 60 cycles per degree with a tolerance of 25 percent.

On figure 16, each of the horizontal modulation transfer functions 1019, 1020, 1021 have 2 valleys over the range of spatial frequencies comprised between 5 and 60 cycles per degree and 1 peak over the range of spatial frequencies comprised between 5 and 60 cycles per degree.

Thus, the horizontal modulation transfer function 1019, the horizontal modulation transfer function 1020 and the horizontal modulation transfer function 1021 present a peak 402a over the range of spatial frequencies comprised between 45 and 53 cycles per degree presenting a maximum value 404a equal to 0.53 at the spatial frequency of 47 cycles per degree.

Thus, the horizontal modulation transfer function 1019, 1020, 1021 present each values over the range of spatial frequencies comprised 45 and 53 cycles per degree that are higher by at least 10 percent than the values of the horizontal modulation transfer function 1019, 1020, 1021 over the range of spatial frequencies comprised 5 and 40 cycles.

Over the ranges of special frequencies comprised between 45 and 53 cycles per degree, the modulation rate of the horizontal modulation transfer function 1019 is nearly identical to the modulation rate of horizontal modulation transfer function 1020 and the modulation rate of the horizontal modulation transfer function 1021 within a tolerance of 10 percent. Especially, over the ranges of special frequencies comprised between 45 and 50 cycles per degree, the modulation rate of the horizontal modulation transfer function 1019 differs by less than 15 percent from the modulation rate of horizontal modulation transfer function 1020 and from the horizontal modulation transfer function 1021.

The modulation rate of the horizontal modulation transfer function 1019 differs by more than 10 percent from the modulation rate of the horizontal modulation transfer function 1020 and from the modulation rate of the horizontal modulation transfer function 1021 over the range of spatial frequencies comprised between 5 and 10 cycles per degree and 10 and 15 cycles per degree.

The modulation rate of the horizontal modulation transfer function 1019 differs by at least 40 percent from the modulation rate of the horizontal modulation transfer function 1020 and from the modulation rate of the horizontal modulation transfer function 1021 over the range of spatial frequencies comprised between 55 and 60 cycles per degree.

Similarly, the vertical modulation transfer function 1022, the vertical modulation transfer function 1023 and the vertical modulation transfer function 1024 present each a modulation rate.

The vertical modulation transfer function 1022, the vertical modulation transfer function 1023 and the vertical transfer function 1024 have each values higher than 0.4 over the range of spatial frequencies comprised between 0 and 7 cycles per degree, especially over the range of spatial frequencies comprised between 1 and 5 cycles per degree.

It can also be seen that the vertical modulation transfer function 1022, the vertical modulation transfer function 1023 and the vertical transfer function 1024 have each values higher than 0.17 over the range of spatial frequencies comprised between 15 and 20 cycles per degree.

The vertical modulation transfer function 1022, the vertical modulation transfer function 1023 and the vertical modulation transfer function 1024 do not have any valley or peak over the range of spatial frequencies comprised between 5 and 60.

On figure 16, the modulation rate of the vertical modulation transfer function 1022 differs by less than 40 percent from the modulation rate of the vertical modulation transfer function 1023 and from the modulation rate of the vertical modulation transfer function 1024 over the range of spatial frequencies comprised between 2 and 60 cycles per degree.

It can be seen that the modulation rate of the vertical modulation transfer function 1022 differs by more than 10 percent from the modulation rate of the vertical modulation transfer function 1023 and from the modulation rate of the vertical modulation transfer function 1024 over the range of spatial frequencies comprised between 5 and 10 cycles per degree and 10 and 15 cycles per degree.

In this example, the modulation transfer functions are very steady from one direction (of the spectacle lens, for instance along axis x) to another (for instance along the axis y) and from a zone to another.

### Fifth example

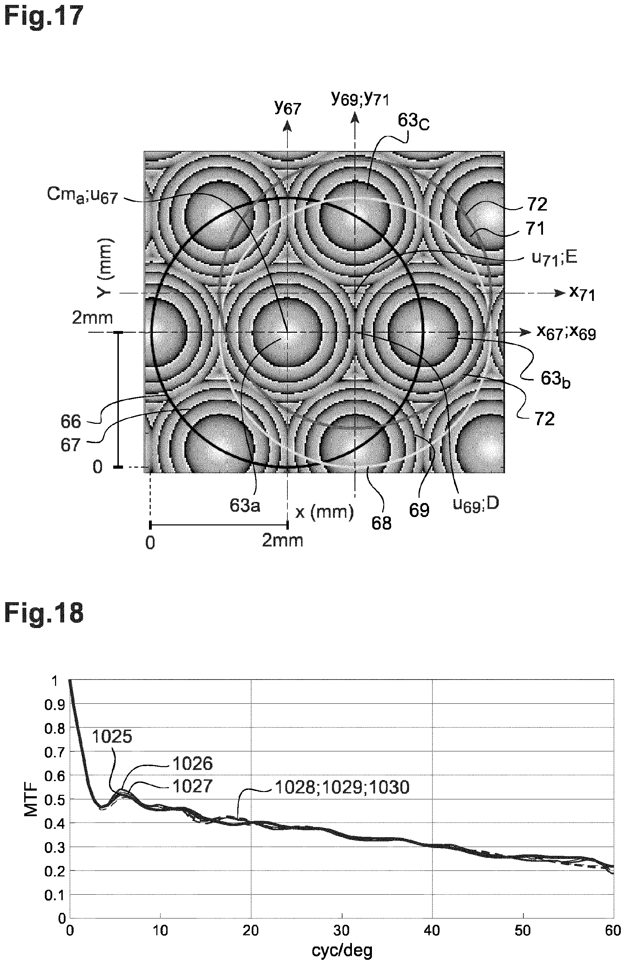

It will be disclosed in relation with figures 17-18-a variant of the fifth example of the spectacle lens according to the present disclosure. Only the differences with the figures 12-14 and 15-16 are described.

In this example, the spectacle lens comprises a similar design of the spectacle lens 40 shown on figures 12 and 13. However, in this fifth example, the micro-optical elements of the spectacle lens are contiguous Pi-Fresnel micro-optical elements (aspheric micro-optical elements) having a diameter of 2.0 millimeters and a dioptric mean power of +4.5 diopters in order 1 of diffraction, and 0 diopter in order 0 of diffraction.

In this embodiment, the spectacle lens comprises a first zone 67 (U₆₇, x₆₇, y₆₇), a second zone 69 (U₆₉, x₆₉, y₆₉) and a third zone 71 (U71, x₇₁, y₇₁). The first 67, second 69 and third 71 zones have each a circular shape of 4 millimeters in diameter.

As for the example explained above, the first zone 67, and respectively the second zone 69 and the third zone 71 comprise each a portion or a part of the micro-optical elements of the first peripheral zone. Typically, the micro-optical elements comprised in the first zone 67 are arranged to cover at least 60 percent of the total area of the first zone 67, respectively the micro-optical elements comprised in the second zone 69 are arranged to cover at least 60 percent of the total area of the second zone.69 and respectively the micro-optical elements comprised in the third zone 71 are arranged to cover at least 60 percent of the total area of the third zone 71.

The first zone 67 has an outer outline 66 presenting a geometrical center U67 that is centered on the micro-optical axis Cma of a micro-optical element 63a spaced by 7.0 millimeters from the center of the spectacle lens.

The second zone 69 has an outer outline 68 presenting a geometrical center U69 that is spaced between 0.10 millimeter and 2.00 millimeters (± 0.075mm) from the geometric center U₆₇ of the first zone 67. Here, the geometrical center U₆₉ is spaced from the geometric center U₆₇ of the first zone 67 by 1.00 millimeter (± 0.075mm). In this example, the vertical axis x₆₇ of the first zone 67 coincides with the axis x₆₉ of the second zone 69. It means that the center U₆₉ of the second zone 69 is spaced from the center U₆₇ of the first zone 67 along the horizontal axes x₆₇, x₆₉.

Typically, the geometric center U₆₉ is centered on a point D positioned between two micro-optical elements 63a, 63b. The geometric center U₆₉ of the second zone 69 is spaced by at least 6.00 millimeters from the geometric center of the spectacle lens shown on figure 17.

The third zone 71 has an outer outline 72 presenting a geometrical center U₇₁ that is spaced between 0.10 millimeter and 2.00 millimeters (± 0.075mm) from the geometric center U₆₇ of the first zone 67 and/or from the geometric center U₆₉ of the second zone U69. Here, the geometrical center U₇₁ is spaced from the geometric center U₆₇ of the first zone 67 by 1.07 millimeter (± 0.075mm) and from the geometric center U₆₉ of the second zone by 0.58 millimeter (± 0.075mm). In this example, the vertical axis y₆₉ of the second zone 69 coincides with the axis y₇₁ of the third zone 71. It means that the center U₇₁ of the third zone 71 is spaced from the center U₆₉ of the second zone 69 by 0.58 millimeter along the axes y₆₉, y₇₁.

Typically, the geometric center U₇₁ is centered on a point E positioned between the edges of three contiguous micro-optical elements noted respectively 63a, 63b, 63c. The geometric center U₆₉ of the second zone 69 is spaced by at least 6.03 millimeters from the geometric center of the spectacle lens.

It will be disclosed, with reference to figure 18, technical features of the first 67, second 69 and third zone 71. The technical features of the first zone 67, second zone 69 and the third zone 71 are studied via the modulation transfer function computed or estimated as explained above in the first example.

Figure 18 shows a graphical representation of the modulation transfer functions calculated throughout the first 67, second 69 and third 71 zones of the first peripheral zone of the spectacle lens.

The figure 18 illustrates on a same graphical:
- a horizontal axis profile 1025 of the modulation transfer function (hereafter referred to as horizontal modulation function 1025) calculated throughout the first zone 67 of the spectacle lens,
- a horizontal axis profile 1026 of the modulation transfer function (hereafter referred to as horizontal modulation function 1026) calculated throughout the second zone 69 of the spectacle lens,
- a horizontal axis profile 1027 of the modulation transfer function (hereafter referred to as horizontal modulation function 1027) calculated throughout the third zone 71 of the spectacle lens,
- a vertical axis profile 1028 of the modulation transfer function (hereafter referred to as horizontal modulation function 1028) calculated throughout the first zone 67 of the spectacle lens,
- a vertical axis profile 1029 of the modulation transfer function (hereafter referred to as horizontal modulation function 1029) calculated throughout the second zone 69 of the spectacle lens,
- a vertical axis profile 1030 of the modulation transfer function (hereafter referred to as horizontal modulation function 1030) calculated throughout the third zone 71 of the spectacle lens.

The horizontal modulation transfer function 1025, the horizontal modulation transfer function 1026 and the horizontal transfer function 1027 have each values higher than 0.4 over the range of spatial frequencies comprised between 0 and 7 cycles per degree, especially over the range of spatial frequencies comprised between 1 and 5 cycles per degree.

It can also be seen that the horizontal modulation transfer function 1025, the horizontal modulation transfer function 1026 and the horizontal transfer function 1027 have each values higher than 0.40 over the range of spatial frequencies comprised between 15 and 20 cycles per degree.

The vertical modulation transfer function 1028, the vertical modulation transfer function 1029 and the vertical transfer function 1030 have each values higher than 0.4 over the range of spatial frequencies comprised between 0 and 7 cycles per degree, especially over the range of spatial frequencies comprised between 1 and 5 cycles per degree.

It can also be seen that the vertical modulation transfer function 1028, the vertical modulation transfer function 1029 and the vertical transfer function 1030 have each values higher than 0.40 over the range of spatial frequencies comprised between 15 and 20 cycles per degree.

The horizontal modulation transfer function 1025, the horizontal modulation transfer function 1026 and the horizontal modulation transfer function 1027 present each a modulation rate.

Similarly, the vertical modulation transfer function 1028, the vertical modulation transfer function 1029 and the vertical modulation transfer function 1030 present each a modulation rate.

The vertical modulation transfer function 1028, the vertical modulation transfer function 1029 and the vertical modulation transfer function 1030 do not have any valley or peak over the range of spatial frequencies comprised between 5 and 60.

In this example, the modulation rate of the horizontal modulation transfer function 1025 is nearly identical within a tolerance of 15 percent to the modulation rate of the horizontal modulation transfer function 1026 and of the modulation rate the horizontal modulation transfer function 1027 over the range of spatial frequencies comprised between 0 and 60 cycles per degree. In other words, the modulation rate of the horizontal modulation transfer function 1025 differs by less than 15 percent from the modulation rate of the horizontal modulation transfer function 1026 and from the modulation rate the horizontal modulation transfer function 1027 over the range of spatial frequencies comprised between 0 and 60 cycles per degree.

In addition, the modulation rate of the vertical modulation transfer function 1028 is nearly identical (within a tolerance of 15 percent) to the modulation rate of the vertical modulation transfer function 1029 and of the modulation rate the vertical modulation transfer function 1030 over the range of spatial frequencies comprised between 0 and 60 cycles per degree. In other words, the modulation rate of the vertical modulation transfer function 1028 differs by less than 10 percent from the modulation rate of the vertical modulation transfer function 1029 and from the modulation rate the vertical modulation transfer function 1030 over the range of spatial frequencies comprised between 0 and 60 cycles per degree.

In addition, it can be seen that over the range of spatial frequencies comprised between 0 to 60 cycles per degree:
- the modulation rate of the horizontal modulation transfer function 1025 differs by less than 10 percent of the modulation rate of the vertical modulation transfer function 1028,
- the modulation rate of the horizontal modulation transfer function 1026 differs by less than 10 percent of the modulation rate of the vertical modulation transfer function 1029, and
- the modulation rate of the horizontal modulation transfer function 1027 differs by less than 10 percent of the modulation rate of the vertical modulation transfer function 1030.
Thus, in this embodiment, the values of the modulation transfer function are very steady from one direction (of the spectacle lens, for instance along x axis) to another and from a zone to another.

### Sixth example

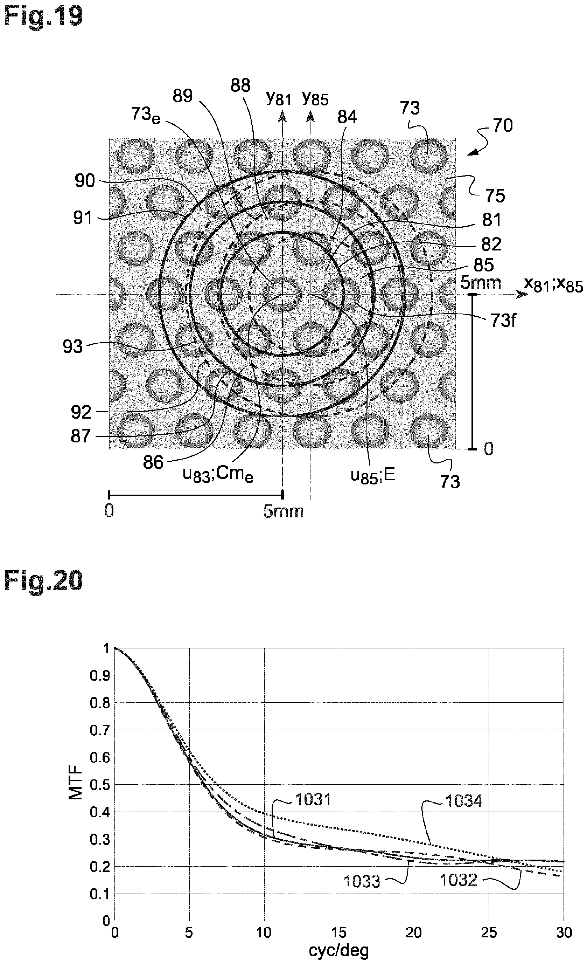

It will be disclosed in relation with figures 19 to 22 a sixth example of a spectacle lens 70 according to the present disclosure. Only the differences with the spectacle lens 10 disclosed above will be described.

The spectacle lens 70 comprises, like the spectacle lens 10, a central zone, a first peripheral zone 75 arranged around the central zone and a second peripheral zone arranged around the first peripheral zone. Each zone of the spectacle lens 70 are concentric. The central zone and the second peripheral zone are without micro-optical element. The sizes of these zones are similar to the sizes of the zones disclosed above for the spectacle lens 10.

The spectacle lens 70 comprises an arrangement of micro-optical elements 73 having a similar shape to the micro-optical elements 13 of the spectacle lens 10. These micro-optical elements 73 are positioned in the first peripheral zone of the spectacle lens 70. For instance, the density of the arrangement of the micro-optical elements over the first peripheral zone of the spectacle lens 70 is comprised between 30 to 70 percent for example between 40 to 60 percent.

In this embodiment, the micro-optical elements 73 of the spectacle lens 70 are all identical. Each micro-optical element 73 have a diameter of 1.12 millimeters and a spherical power of 3.5 diopters. In contrast to the spectacle lens 10, each micro-optical element 73 is spaced from the adjacent micro-optical elements 73 by at least 0,1 millimeter, here by at least 0.5 millimeter. For example, the edge of one optical element 73 is spaced from the edge of an adjacent optical element by at least 0.5 millimeter.

Like the spectacle lens 10, the first peripheral zone of the spectacle lens 70 illustrated by figure 19 comprises a first zone 81 (U81, x₈₁, y₈₁) having a circular shape of 4 millimeters in diameter and a second zone 85 (U85, x₈₅, y₈₅) having a circular shape of 4 millimeters in diameter. The first zone 81 and respectively the second zone 85 comprise each a portion or a part of the micro-optical elements of the first peripheral zone. Typically, the micro-optical elements comprised in the first zone 81 are arranged to cover at least 30 percent of the total area of the first zone 81 and respectively the micro-optical elements comprised in the second zone 85 are arranged to cover at least 35 percent of the total area of the second zone 85.

The first zone 81 has an outer outline 82 presenting a geometrical center U₈₁ that is centered on the micro-optical axis Cme a micro-optical element 73e spaced by 9.8 millimeters from the center of the spectacle lens 70.

The second zone 85 has an outer outline 84 presenting a geometrical center U₈₅ that is spaced between 0.10 millimeter and 2.00 millimeters (± 0.075mm) from the geometric center U₈₁ of the first zone 81. Here, the geometrical center U₈₅ is spaced from the geometric center U₈₁ of the first zone 81 by 0.85 millimeter (± 0.075mm). Typically, the geometric center U₈₅ is centered on a point E positioned between the edges of two adjacent micro-optical element, the micro-optical element 73e and another micro-optical element numbered 73f. The geometric center U₈₅ of the second zone 85 is spaced by at least 8.00 millimeters from the geometric center V70 of the spectacle lens 70. In this example, the axis x₈₁ of the first zone 81 coincides with the axis x₈₅ of the second zone 85 but the axis y₈₁ is spaced from 0.85 millimeter from the axis y₈₅.

In addition, the first peripheral zone of the spectacle lens 70 illustrated by figure 19 comprises a third zone 86 having a circular shape of 4 millimeters in diameter and a fourth zone 88 having a circular shape of 4 millimeters in diameter. The third zone 86 and respectively the fourth zone 88 comprise each a portion or a part of the micro-optical elements of the first peripheral zone. Typically, the micro-optical elements comprised in the third zone 86 are arranged to cover at least 25 percent of the total area of the third zone 86 and respectively the micro-optical elements comprised in the fourth zone 88 are arranged to cover at least 35 percent of the total area of the fourth zone 88.

The third zone 86 has an outer outline 87 presenting a geometrical center centered on the micro-optical axis Cm of one of micro-optical elements comprised in the third zone 86. Here, the geometric center of the third zone 86 coincides with the geometric center U₈₁ of the first zone 81. In other words, it means that the first 81 and the third 86 zones are concentric.

The fourth zone 88 has an outer outline 89 presenting a geometrical center centered on the micro-optical axis Cm of one of the micro-optical elements comprised in the fourth zone 88. Here, the geometric center of the fourth zone 88 coincides with the geometric center U₈₅ of the second zone 85. It means that the second 85 and fourth 88 zones are concentric.

The first peripheral zone further comprises a fifth zone 90 having a circular shape of 8 millimeters in diameter.

The fifth zone 90 comprises a part of the micro-optical elements of the first peripheral zone. Typically, the micro-optical elements comprised in the fifth zone 90 are arranged to cover at least 30 percent of the total area of the fifth zone 90. Here, the density of the micro-optical elements in the fifth zone 90 is higher than 35 percent.

The fifth zone 90 has an outer outline 91 presenting a geometrical center centered on the micro-optical axis Cm of one of the micro-optical elements comprised in the fifth zone 90. Here, the geometric center of the fifth zone 90 coincides with the geometric center U₈₁ of the first zone 81. It means that the third 81 and fifth 90 zones are concentric.

The first peripheral zone further comprises a sixth zone 92 having a circular shape of 8 millimeters in diameter.

The sixth zone 92 comprises a part of the micro-optical elements of the first peripheral zone. Typically, the micro-optical elements comprised in the sixth zone 92 are arranged to cover at least 30 percent of the total area of the sixth zone 92. Here, the density of the micro-optical elements in the fifth zone 92 is higher than 35 percent.

The sixth zone 92 has an outer outline 93 presenting a geometrical center centered on the micro-optical axis Cm of one of the micro-optical elements comprised in the sixth zone 92. Here, the geometric center of the sixth zone 92 coincides with the geometric center U₈₅ of the second zone 85. It means that the second 85 and sixth 92 zones are concentric.

It will be disclosed, with reference to figures 20-22, technical features of the first 81, second 85, third 86, fourth 88, fifth 90 and sixth 92 zones.

Figure 20 shows a graphical representation of the modulation transfer functions calculated throughout the first 81 and second 85 zones of the first peripheral zone of the spectacle lens 70.

The figure 20 illustrates on a same graphical:
- a horizontal axis profile 1031 of the modulation transfer function (hereafter referred to as horizontal modulation function 1031) calculated throughout the first zone 81 of the spectacle lens 70,
- a vertical axis profile 1032 of the modulation transfer function (hereafter referred to as vertical modulation function 1032) calculated throughout the first zone 81 of the spectacle lens 70,
- a horizontal axis profile 1033 of the modulation transfer function (hereafter referred to as horizontal modulation function 1033) calculated throughout the second zone 85 of the first peripheral zone of the spectacle lens 70, and
- a vertical axis profile 1034 of the modulation transfer function (hereafter referred to as vertical modulation function 1034) calculated throughout the fourth zone 85 of the first peripheral zone of the spectacle lens 70.

The horizontal modulation transfer function 1031 and the horizontal modulation transfer function 1033 have each values higher than 0.55 over the range of spatial frequencies comprised between 0 and 7 cycles per degree, especially over the range of spatial frequencies comprised between 1 and 5 cycles per degree.

It can also be seen that the horizontal modulation transfer function 1031 and the horizontal modulation transfer function 1033 have each values higher than 0.23 over the range of spatial frequencies comprised between 15 and 20 cycles per degree.

The vertical modulation transfer function 1032 and the vertical modulation transfer function 1034 have each values higher than 0.4 over the range of spatial frequencies comprised between 0 and 7 cycles per degree, especially over the range of spatial frequencies comprised between 1 and 5 cycles per degree.

It can also be seen that the vertical modulation transfer function 1032 and the vertical modulation transfer function 1034 have each values higher than 0.25 over the range of spatial frequencies comprised between 15 and 20 cycles per degree.

The horizontal modulation transfer function 1031 and the horizontal modulation transfer function 1033 present each a modulation rate.

The modulation rate of the horizontal modulation transfer function 1031 differs by less than 10 percent from the modulation rate of the horizontal modulation transfer function 1033 over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

Thus, the modulation rates of the horizontal modulation transfer functions 1031, 1033 are nearly identical with a tolerance of less than 10 percent over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

In addition, the vertical modulation transfer function 1032 and the vertical modulation transfer function 1034 present each a modulation rate.

The modulation rate of the vertical modulation transfer function 1032 differs by less than 10 percent from the modulation rate of the vertical modulation transfer function 1034 over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

Thus, the modulation rates of the vertical modulation transfer functions 1032, 1034 are nearly identical with a tolerance of less than 20 percent over the range of spatial frequencies comprised between 0 and 5 cycles per degree and over the range of spatial frequencies comprised between 20 and 30 cycles per degree. The modulation rates of the vertical modulation transfer functions 1032 differs by at least 10 percent from the modulation rate of the vertical modulation transfer function 1034 over the range of spatial frequencies comprised between 15 and 20 cycles per degrees.

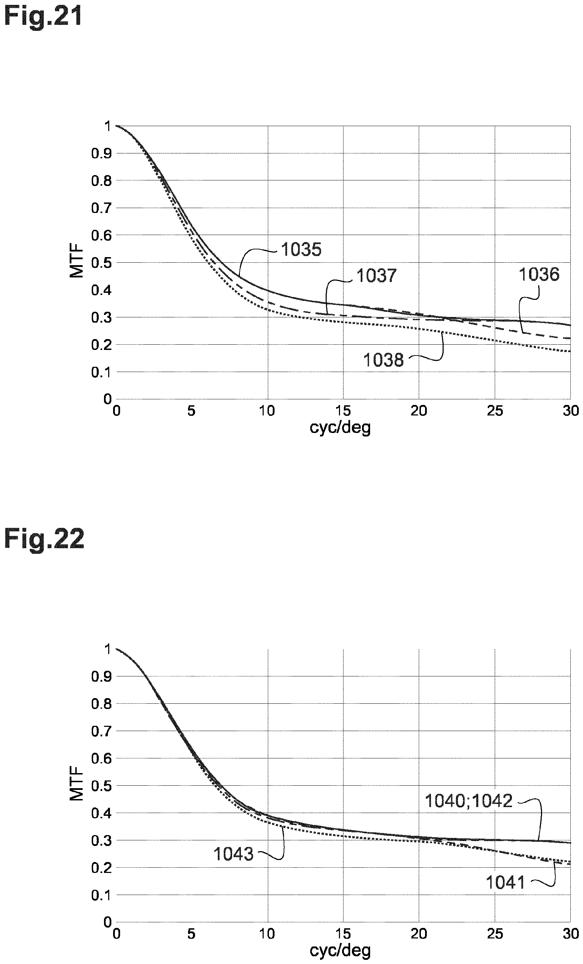

Figure 21 shows a graphical representation of the modulation transfer functions calculated throughout the third 86 and fourth 88 zones of the first peripheral zone of the spectacle lens 70.

The figure 21 illustrates on a same graphical:
- a horizontal axis profile 1035 of the modulation transfer function (hereafter referred to as horizontal modulation function 1035) calculated throughout the third zone 86 of the spectacle lens 70,
- a vertical axis profile 1036 of the modulation transfer function (hereafter referred to as vertical modulation function 1036) calculated throughout the third zone 86 of the spectacle lens 70,
- a horizontal axis profile 1037 of the modulation transfer function (hereafter referred to as horizontal modulation function 1037) calculated throughout the fourth zone 88 of the first peripheral zone of the spectacle lens 70, and
- a vertical axis profile 1038 of the modulation transfer function (hereafter referred to as vertical modulation function 1038) calculated throughout the fourth zone 88 of the first peripheral zone of the spectacle lens 70.

The horizontal modulation transfer function 1035 and the horizontal modulation transfer function 1037 have each values higher than 0.45 over the range of spatial frequencies comprised between 0 and 7 cycles per degree, especially over the range of spatial frequencies comprised between 1 and 5 cycles per degree.

It can also be seen that the horizontal modulation transfer function 1035 and the horizontal modulation transfer function 1037 have each values higher than 0.30 over the range of spatial frequencies comprised between 15 and 20 cycles per degree.

The vertical modulation transfer function 1038 and the vertical modulation transfer function 1036 have each values higher than 0.4 over the range of spatial frequencies comprised between 0 and 7 cycles per degree, especially over the range of spatial frequencies comprised between 1 and 5 cycles per degree.

It can also be seen that the vertical modulation transfer function 1036 and the vertical modulation transfer function 1038 have each values higher than 0.25 over the range of spatial frequencies comprised between 15 and 20 cycles per degree.

The horizontal modulation transfer function 1035 and the horizontal modulation transfer function 1037 present each a modulation rate.

On figure 21, the modulation rate of the horizontal modulation transfer function 1035 differs by less than 10 percent from the modulation rate of the horizontal modulation transfer function 1037 over the range of spatial frequencies comprised between 0 and 5 cycles per degree and between 20 and 30 cycles per degree. The modulation rate of the horizontal modulation transfer function 1035 differs by more than 10 percent from the modulation rate of the horizontal modulation transfer function 1037 over the range of spatial frequencies comprised between 10 and 15 cycles per degree, and between 15 and 20 cycles per degree.

In addition, the vertical modulation transfer function 1036 and the vertical modulation transfer function 1038 present each a modulation rate.

On figure 21, the modulation rate of the vertical modulation transfer function 1036 differs by less than 10 percent from the modulation rate of the vertical modulation transfer function 1038 over the range of spatial frequencies comprised between 0 and 5 cycles per degree. The modulation rate of the vertical modulation transfer function 1036 differs by more than 10 percent from the modulation rate of the vertical modulation transfer function 1038 over the range of spatial frequencies comprised between 10 and 15 cycles per degree and between 15 and 20 cycles per degree.

Figure 22 shows a graphical representation of the modulation transfer functions calculated throughout the fifth 90 and sixth 92 zones of the first peripheral zone of the spectacle lens 70.

The figure 22 illustrates on a same graphical:
- a horizontal axis profile 1040 of the modulation transfer function (hereafter referred to as horizontal modulation function 1040) calculated throughout the fifth zone 90 of the spectacle lens 70,
- a vertical axis profile 1041 of the modulation transfer function (hereafter referred to as vertical modulation function 1041) calculated throughout the fifth zone 90 of the spectacle lens 70,
- a horizontal axis profile 1042 of the modulation transfer function (hereafter referred to as horizontal modulation function 1042) calculated throughout the sixth zone 92 of the first peripheral zone of the spectacle lens 70, and
- a vertical axis profile 1043 of the modulation transfer function (hereafter
referred to as vertical modulation function 1043) calculated throughout the sixth zone 92 of the first peripheral zone of the spectacle lens 70.

The horizontal modulation transfer function 1040 and the horizontal modulation transfer function 1042 present each a modulation rate.

On figure 22, the modulation rate of the horizontal modulation transfer function 1040 differs by less than 15 percent from the modulation rate of the horizontal modulation transfer function 1042 over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

Thus, the modulation rates of the horizontal modulation transfer functions 1040, 1042 are nearly identical with a tolerance of less than 5 percent over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

In addition, the vertical modulation transfer function 1041 and the vertical modulation transfer function 1043 present each a modulation rate.

On figure 22, the modulation rate of the vertical modulation transfer function 1041 differs by less than 10 percent from the modulation rate of the vertical modulation transfer function 1043 over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

Thus, the modulation rates of the vertical modulation transfer functions 1041, 1043 are nearly identical with a tolerance of less than 10 percent over the range of spatial frequencies comprised between 0 and 30 cycles per degree, typically over the range of spatial frequencies comprised between 0 and 5 cycles per degree, between 5 and 10 cycles per degree, between 10 and 15 cycles per degree, between 15 and 20 cycles per degree, and between 20 and 30 cycles per degree.

The invention also relates to a computer-implemented method for determining a spectacle lens as disclosed above. The spectacle lens is intended to be worn by a wearer.

The computer implemented method comprises:
- defining a first zone comprising a plurality of micro-optical elements arranged to cover at least 30 percent of the total area of the first zone;
- defining a second zone comprising a plurality of micro-optical elements arranged to cover at least 30 percent of the total area of the second zone,
   the first and second zones are different,
- determining a shape, a size and a location of each micro-optical element in the first zone and second zone so that first and second zones have respective modulation transfer functions providing, for each frequency within a first predetermined range of spatial frequencies, respective modulation rates which are nearly identical with a tolerance of less than 40 percent.

The first zone is different from the second zone if at least one part of the first zone is not also part of the second zone or if at least one part of the second zone is not also part of the first zone.

This can happen for example if:
- the center of the first zone is located at a different position than the center of the second zone for example if they are spaced by at least 0.5 millimeter,
- the shape of the first zone is different from the shape of the second zone,
- the size of the first zone is different from the size of the second zone,
- an orientation of the first zone is different from an orientation of the second zone.
Among these conditions only one is necessary to have a first zone that is different from the second zone. For example, one can have a first zone and second zone with same shape and size, these zones will be different if another condition is reached, for example if the center of first zone is not collocated with the center of the second zone.

Typically, the computer implemented method is carried out successively by changing the optical features of the micro-optical elements of the first and second zones and by comparing the modulation transfer functions of the first and second zones. If the modulation rate of the modulation transfer function of the first zone differs by less than 40 percent (preferably by less than 20 percent) in a given range of spatial frequencies, the optical features of the micro-optical elements of the first and second zones are validated to be the micro-optical elements of the first and second zones of a manufactured spectacle lens. When the micro-optical elements of the first and second zones are validated, the computer implemented process is configured to spatially scan the surface of the optical design of the spectacle lens by adding a third zone (as explained above) arranged around the first zone and a fourth zone (as explained above) arranged around the second zone. Typically, the step of determining is performed in that case with the third and fourth zones. Once again, two other zones, the fifth and sixth zones are defined as explained above and then the optical features of these zones are determined like the first and second zone. Successively zones are thus defined to determine the optical design of the micro-optical elements covering the surface of the spectacle lens.

The computer-implemented method as disclosed above is typically used to manufacture the spectacle lens (i.e. a physical lens element). Typically, the method for manufacturing the spectacle lens comprises:
- a step of determining a design of the lens element using the computer-implemented method as disclosed above,
- a step of manufacturing the lens element following the design.

## Claims

1. Spectacle lens comprising at least:
- a first zone comprising a plurality of micro-optical elements arranged to cover at least 30 percent of the total area of the first zone, and
- a second zone comprising a plurality of micro-optical elements arranged to cover at least 30 percent of the total area of the second zone,
wherein, the first zone is different from the second zone, and wherein the micro-optical elements of the first and second zones are arranged such that
for a predetermined range of spatial frequencies, values of a modulation transfer function of the first zone and values of a modulation transfer function of the second zone differ by less than 40%.

2. Spectacle lens according to claim 1,
the predetermined range of spatial frequencies being a first predetermined range of the spatial frequencies,
wherein the micro-optical elements of the first zone and the micro-optical elements of the second zone are arranged such that:
for a second predetermined range of spatial frequencies, the values of the modulation transfer function of the first zone and the values of the modulation transfer function of the second zone differ by more than 10%.

3. Spectacle lens according to claim 2, wherein:
- the first range of the spatial frequencies is comprised between 1 and 5 cycles per degree and the second range of the spatial frequencies is comprised between 15 and 20 cycles per degree or,
- the second range of the spatial frequencies is comprised between 1 and 5 cycles per degree and the first range of the spatial frequencies is comprised between 15 and 20 cycles per degree.

4. Spectacle lens according to any one of claims 1 to 3, wherein a projection of the first zone on a plane perpendicular to an optical axis of the spectacle lens presents a circular outline and has a diameter comprised between 2 and 20 millimeters.

5. Spectacle lens according to any one of claims 1 to 4, wherein a projection of the second zone on a plane perpendicular to an optical axis of the spectacle lens presents a circular outline and has a diameter comprised between 2 and 20 millimeters.

6. Spectacle lens according to any one of claims 1 to 5, wherein a projection of the first zone on a plane perpendicular to an optical axis of the spectacle lens and a projection of the second zone on the plane have different shapes or different sizes.

7. Spectacle lens according to any one of claims 1 to 6, wherein a projection of the first zone on a plane perpendicular to an optical axis of the spectacle lens and a projection the second zone on the plane are concentric.

8. Spectacle lens according to any one of claims 1 to 6, wherein a geometrical center of a projection of the first zone on a plane perpendicular to an optical axis of the spectacle lens is spaced by at least 0.5 millimeter from a geometrical center of a projection of the second zone on the plane.

9. Spectacle lens according to any one of claims 1 to 8, wherein:
- a density of the micro-optical elements of the first zone differs by less than 5% from a density of the micro-optical elements of the second zone, and/or
- an average mean optical power of at least one of the micro-optical elements of the first zone is different from an average mean optical power of at least one of the micro-optical elements of the second zone, and/or
- an optical function of at least one of the micro-optical elements of the first zone is different from an optical function of the at least one of micro-optical elements of the second zone and/or
- a diameter of at least one of the micro-optical elements of the first zone differs by less than 5% from a diameter of at least one of the micro-optical elements of the second zone.

10. Spectacle lens according to any one of claims 1 to 9,
wherein for spatial frequencies between 1 and 5 cycles per degree, the values of the modulation transfer function of the first zone are higher than 0.3 for example higher than 0.4 or superior to 0.5 and
for spatial frequencies between 15 and 20 cycles per degree, the values of the modulation transfer function of the first zone are higher than 0.05 for example superior to 0.1 for example higher than 0.5 and/or
wherein for the spatial frequencies between 1 and 5 cycles per degree, the values of the modulation transfer function of the second zone are higher than 0.3 for example higher than 0.4 or higher than 0.5 and
for the spatial frequencies between 15 and 20 cycles per degree, the values of the modulation transfer function of the second zone are higher than 0.05 for example higher than 0.1 for example higher than 0.5 .

11. Spectacle lens element according to any one of claims 1 to 10 wherein at least one of the micro-optical elements of the first zone has an average mean optical power value comprised between 1 diopter and 10 diopters and/or at least one of the micro-optical elements of the second zone has an average mean optical power value comprised between 1 diopter and 10 diopters.

12. Spectacle lens according to any one of claims 1 and 11, wherein the micro-optical elements of the first zone are arranged according to a first pattern comprising at least two first concentric rings of micro-optical elements, a first of the at least the two first concentric rings being spaced from a second of the at least two first concentric rings by at least 1 millimeter and/or
the micro-optical elements of the second zone are arranged according to a second pattern comprising at least two second concentric rings of micro-optical elements, a first of the at least two second concentric rings being spaced from a second of the at least two second concentric rings by at least 1 millimeter.

13. Spectacle lens according to any one of claims 1 to 12, wherein at least one of the micro-optical elements of the first zone is spaced from at least another of the micro-optical elements of the first zone or at least of the micro-optical elements of the second zone by at least 0,3 millimeter.

14. Spectacle lens according to any one of claims 1 to 13, wherein at least one of the micro-optical elements of the first zone or at least one of the micro-optical elements of the second zone provide refractive optical function, diffractive optical function or diffusive optical function.

15. Spectacle lens according to any one of claims 1 to 14, wherein the spectacle lens comprises a third zone comprising a plurality of micro-optical elements arranged to cover at least 30 percent of the third zone,
wherein the third zone is different from the first zone, the third zone is different from the second zone, and the micro-optical elements of the first zone and the micro-optical elements of the third zone are arranged such that:
for the predetermined range of spatial frequencies, the values of the modulation transfer function of the first zone and values of a modulation transfer function of the third zone differ by less than 20%.
